# EUROPÄISCHE PATENTSCHRIFT

(11) **EP 2 770 019 B1**
(45) Veröffentlichungstag und Bekanntmachung des Hinweises auf die Patenterteilung: **04.07.2018**
(21) Anmeldenummer: 13180027.8
(22) Anmeldetag: 12.08.2013
(51) Int. Cl.: C08K 9/08

(54) **Kohlenstofffaserhaltige Partikel sowie deren Verwendung und Herstellung**
Particles containing carbon fibre, their use and their preparation
Particule contenant des fibres de carbone, leur utilisation et leur fabrication

(30) Priorität: 20.02.2013 EP 13000863; 11.03.2013 EP 13001218
(43) Veröffentlichungstag der Anmeldung: 27.08.2014
(73) Patentinhaber: ELG Carbon Fibre International GmbH, 47138 Duisburg (DE)
(72) Erfinder: Gehr, Marco, 51789 Lindlar (DE)
(74) Vertreter: Strehlke, Ingo Kurt

(56) Entgegenhaltungen:
- WO-A2-2011/070026
- DE-A1-102005 044 395
- US-A1- 2009 186 219
- US-A1- 2012 077 402

## Beschreibung

Die vorliegende Erfindung betrifft das technische Gebiet der Verbundstoffe (Compounds), insbesondere Verbundstoffe mit Kohlenstofffasern als vorzugsweise partikuläre Additive.

Insbesondere betrifft die vorliegende Erfindung kohlenstofffaserhaltige Partikel, insbesondere in Form von Pellets oder Granulaten, welche sich insbesondere für die Herstellung von kohlenstofffaserhaltigen Materialien, vorzugsweise kohlenstofffaserhaltigen Kunststoffen, insbesondere kohlenstofffaserhaltigen Komposit- oder Verbundmaterialien, eignen, und ein Verfahren zur deren Herstellung sowie deren Verwendung.

Verbundstoffe (synonym auch Compounds, Komposite oder Formmassen genannt) sind im Allgemeinen vorzugsweise homogene Mischungen aus insbesondere sortenreinen Grundstoffen, insbesondere Kunststoffen und Kunststoffmischungen, denen mindestens ein Zugschlagstoff, wie Füllstoffe, Verstärkungsstoffe oder Additive, beigemischt worden sind, um die Eigenschaften des Grundstoffs zu verbessern, insbesondere im Hinblick auf verbesserte Leistungsfähigkeit, geringere Kosten, vereinfachte Weiterverarbeitung und attraktiveres Erscheinungsbild. So können beispielsweise die UV-Beständigkeit und die Hydrolysebeständigkeit von Kunststoffen, welche für Bauteile im Außenbereich eingesetzt werden sollen, durch Beimischung von Stabilisatoren signifikant erhöht werden.

Als Füllstoffe werden insbesondere partikelförmige Stoffe, wie Talkum, Kreide, Glimmer (Mica), Bariumsulfat, Ruß, Keramikpulver, Metallpulver oder dergleichen, verwendet, welche das Volumen der Verbundstoffe erhöhen sollen, ohne jedoch die wesentlichen Eigenschaften zu ändern. Eine Erhöhung des Volumens ist insbesondere im Hinblick auf die Lager- und Transportkosten der Verbundstoffe wünschenswert.

Durch die Zugabe von Additiven, wie Antioxidantien, Gleitmitteln, Antistatika, Stabilisatoren, Lichtschutzmitteln, Trennmitteln, Entformungshilfen, Nukleierungsmitteln, UV-Absorbern, Flammschutzmitteln, Fluorpolymeren (z.B. PTFE), Pigmenten oder dergleichen, lassen sich die Eigenschaften des Grundstoffs gezielt auf die jeweilige Anwendung einstellen. Durch Additive können beispielsweise die Farbe oder die thermische und chemische Stabilität des Verbundstoffs eingestellt werden. Weiterhin führt die Zugabe von Verarbeitungshilfsstoffen zu einer verbesserten Weiterverarbeitung der Verbundstoffe in nachfolgenden Prozessen, wie Spritzgießen oder dergleichen.

Veränderungen der mechanischen Eigenschaften des Grundstoffs, insbesondere eine Schlagzähmodifizierung mechanischer Kenngrößen, wie Zugfestigkeit, Bruchdehnung und Schlagzähigkeit, kann insbesondere durch die Zugabe von Verstärkungsstoffen erreicht werden. Als Verstärkungsstoffe werden insbesondere Glasfasern, vorzugsweise in Form von sogenannten Kurz- und Langglasfasern, Kohlenstofffasern oder Wollastonit eingesetzt.

Verbundstoffe werden insbesondere durch sogenannte Compoundierung hergestellt, wobei die Compoundierung der Kunststoffaufbereitung entspricht und den Veredelungsprozess von Kunststoffen durch Beimischung von Zuschlagstoffen (z. B. Füllstoffen, Verstärkungsstoffen, Additiven etc.) zur gezielten Optimierung der Eigenschaften der Grundstoffe beschreibt. Im Allgemeinen umfasst die Compoundierung verschiedene Verfahrensstufen oder Verfahrensoperationen, wie Fördern, Aufschmelzen, Dispergieren, Mischen, Entgasen und Druckaufbau, und erfolgt insbesondere in Extrudern, beispielsweise gleichläufigen Doppelschneckenextrudern, gegenläufigen Doppelschneckenextrudern, Planetwalzenextrudern, Ko-Knetern etc.

Um eine möglichst homogene Mischung zwischen Grundstoffen einerseits und Zuschlagstoffen andererseits zu gewährleisten, sollten sich die Zuschlagstoffe im Rahmen der Compoundierung möglichst homogen in den Grundstoff einarbeiten lassen. Jedoch weisen die meisten der zuvor angeführten Zuschlagstoffe infolge ihrer schlechten Benetzbarkeit eine oftmals nur unzureichende Einarbeitbarkeit auf, so dass nicht vollständig homogene Verbundstoffe resultieren, welche aufgrund der inhomogenen Verteilung der Zuschlagstoffe keine gleichbleibenden Eigenschaften innerhalb des Verbundstoffes und damit eine nur unzureichende Qualität aufweisen.

Aufgrund der schlechten Einarbeitbarkeit der Zuschlagstoffe kann es darüber hinaus zu einer Entmischung von Grundstoff und Zuschlagstoffen kommen, so dass eine Herstellung des Verbundstoffs nicht ohne Weiteres möglich ist. Dies kann insbesondere dann der Fall sein, wenn hohe Mengen an verschiedenen Zuschlagstoffen verwendet werden, insbesondere wenn die Zuschlagstoffe signifikant abweichende Dichten in Bezug auf den Grundstoff, insbesondere den Kunststoff, aufweisen.

Die schlechte Einarbeitbarkeit der Zuschlagstoffe kann zwar durch die Anwendung von hohen Scherkräften verbessert werden; hierbei kann es jedoch zu einer teilweisen Zerstörung, insbesondere Zerkleinerung, der Zuschlagstoffe kommen. Insbesondere bei Verwendung von Versteifungsstoffen führt eine Zerkleinerung zu signifikant verschlechterten mechanischen Eigenschaften des Verbundstoffes.

Weiterhin führt die Einarbeitung von Zuschlagstoffen ihm Rahmen der Compoundierung oftmals zu einer negativen Beeinflussung der rheologischen Eigenschaften, insbesondere der Fließeigenschaften oder Fließraten. Jedoch ist eine Verminderung der Fließeigenschaften, insbesondere bei hohen Mengen an Zuschlagstoffen, für eine Weiterverarbeitung der Verbundstoffe von Nachteil, da für die nachfolgende Verarbeitung der Verbundstoffe z. B. in Spritzgussvorrichtungen oder dergleichen hohe Fließraten benötigt werden.

Auch weisen die Zuschlagstoffe aufgrund ihrer oftmals staubförmigen Beschaffenheit eine schlechte Handhabbarkeit auf. So müssen bei staubförmigen Zuschlagstoffen besondere Absaug- und Filteranlagen verwendet werden, um eine Gesundheitsgefährdung während der Herstellung und Verwendung der Zuschlagstoffe aufgrund der Staubentwicklung auszuschließen und um die Gefahr von Staubexplosionen zu vermeiden. Weiterhin kommt es aufgrund der staubförmigen Beschaffenheit auch zu einer verschlechterten Dosierbarkeit der Zuschlagstoffe, da die Zudosierung einer exakten Menge an Zuschlagstoff oder die Herstellung einer exakten Mischung von Zuschlagstoffen nicht gewährleistet ist. Für eine gleichbleibende Qualität der Verbundstoffe ist jedoch eine exakte Dosierbarkeit der Zuschlagstoffe von großer Bedeutung.

Um eine bessere Einarbeitbarkeit, Handhabbarkeit und Dosierbarkeit der Zuschlagstoffe zu erreichen, werden im Stand der Technik bisweilen auch Formkörper, insbesondere Agglomerate, Pellets, Briketts oder dergleichen, aus den betreffenden Zuschlagstoffen hergestellt. Die nach dem Stand der Technik hergestellten Formkörper liefern jedoch keine zufriedenstellenden Ergebnisse, da sie oftmals keine ausreichend homogene Einarbeitung in Grundstoffe, insbesondere Kunststoffe, ermöglichen. Auch führt die Einarbeitung der nach dem Stand der Technik bekannten Formkörper in Grundstoffe (z. B. Kunststoffe), insbesondere im Rahmen des Compoundierens, meist zu einer negativen Beeinflussung der rheologischen Eigenschaften, insbesondere der Fließeigenschaften, insbesondere bei hohen Mengen an Zuschlagstoffen, so dass Verbundstoffe resultieren, welche sich aufgrund ihrer geringen Fließrate nur schwer weiterverarbeiten lassen.

Weiterhin kann es aufgrund des hohen Anteils der zur Herstellung der Formkörper im Stand der Technik verwendeten Hilfsmittel (z.B. sogenannte Schlichtungsmittel etc.) zu Störungen innerhalb der Grundstoffmatrix, insbesondere Kunststoffmatrix, kommen, welche zu Materialfehlern innerhalb des Verbundstoffs führen können; auch kann es bei Verwendung der die Hilfsstoffe enthaltenden Formkörper des Standes der Technik zu Inkompatibilitäten mit dem verwendeten Grundstoff kommen, so dass die Formkörper nur für ganz bestimmte Grundstoffe verwendet werden können und nicht universell für eine große Vielzahl von Grundstoffen einsetzbar sind.

Die aus Zuschlagstoffen hergestellten Formkörper des Standes der Technik sind folglich in Bezug auf ihren industriellen Einsatz mit einer Vielzahl von Nachteilen verbunden, so dass eine erhöhte Nachfrage nach Formkörpern aus Zuschlagstoffen besteht, welche eine verbesserte Einarbeitbarkeit in unterschiedlichste Grundstoffe, insbesondere Kunststoffe, aufweisen, wobei die rheologischen Eigenschaften des resultierenden Verbundstoffs nicht signifikant beeinträchtigt werden sollen.

Die DE 10 2005 044 395 A1 betrifft eine Polyolefinharzzusammensetzung mit spezieller Zusammensetzung Insbesondere soll die dort beschriebene Polyolefinharzzusammensetzung Polyolefinharze sowie Ruß und Stabilisatoren enthalten. Darüber hinaus können auch weitere Inhaltsstoffe vorhanden sein, wie beispielsweise faserförmige Füllstoffe zu Zwecken der Verstärkungswirkung, wobei die Füllstoffe gegebenenfalls mit einem Oberflächenbehandlungsmittel behandelt sein können.

Die US 2012/0077402 A1 betrifft ein textiles Halbprodukt (*semi-finished textile product*), insbesondere in Form eines sogenannten *Prepreg,* wobei das dort genannte Halbfabrikat bzw. Halbprodukt Kohlenstofffasern aufweisen kann.

Des Weiteren betrifft die WO 2011/070026 A2 ein Kohlenstoffpartikelgranulat, eine Dispersion aus einem solchen Kohlenstoffpartikelgranulat sowie ein Verfahren zu dessen Herstellung.

Schließlich betrifft die US 2009/0186219 A1 einen elektrisch leitfähigen Klebstoff mit einem elektrisch leitfähigen Pulver, einem hitzehärtbaren Silikon und einem Lösemittel.

Der vorliegenden Erfindung liegt daher die Aufgabe zugrunde, für die Inkorporierung in Kunststoffe geeignete Zuschlagstoffe in gut handhabbarer Form, vorzugsweise in partikulärer Form, insbesondere in Form von Granulaten oder Pellets, bereitzustellen, wobei die zuvor geschilderten, mit dem Stand der Technik verbundenen Nachteile zumindest weitgehend vermieden oder aber wenigstens abgeschwächt werden sollen.

Insbesondere ist eine Aufgabe der vorliegenden Erfindung die Bereitstellung von Zuschlagstoffen auf Basis von Kohlenstofffasern in gut handhabbarer Form, vorzugsweise in partikulärer Form, insbesondere in Form von Pellets oder Granulaten, wobei eine gute Handhabbarkeit gewährleistet sein soll. Des Weiteren soll eine gute Einarbeitbarkeit bzw. Inkorporierbarkeit der Zuschlagstoffe in Kunststoffe gewährleistet sein, wobei insbesondere eine gute Kompatibilität mit den Grundstoffen, insbesondere Kunststoffen, bei gleichzeitig möglichst geringem Einfluss auf die rheologischen Eigenschaften angestrebt wird.

Die Anmelderin hat nun in überraschender Weise gefunden, dass die zuvor geschilderte Problemstellung in effizienter Weise gelöst werden kann, indem als Zuschlagstoffe Partikel, insbesondere Pellets oder Granulate, aus vorzugsweise zerkleinerten Kohlenstofffasern bereitgestellt werden, welche unter Verwendung eines silan- und/oder siloxanbasierten Bindemittels hergestellt sind. Die erfindungsgemäßen kohlenstofffaserhaltigen Partikel, insbesondere Pellets oder Granulate, weisen aufgrund ihrer Rieselfähigkeit und ihrer Staubfreiheit nicht nur eine gute Handhabbarkeit und Dosierbarkeit auf, sondern gewährleisten auch eine homogene Einarbeitung der Kohlenstofffasern in verschiedenartige Grundstoffe, insbesondere Kunststoffe. Weiterhin wird bei Einarbeitung der erfindungsgemäßen kohlenstofffaserhaltigen Partikel, insbesondere Pellets oder Granulaten, in die Grundstoffe, insbesondere Kunststoffe, überraschenderweise keine Verschlechterung der rheologischen Eigenschaften, insbesondere der Fließeigenschaften, beobachtet, so dass sich die resultierenden Verbundstoffe ohne Probleme weiterverarbeiten lassen, insbesondere mittels Spritzgießen oder dergleichen.

Zur Lösung des zuvor geschilderten Problems schlägt die vorliegende Erfindung somit kohlenstofffaserhaltige Partikel nach Anspruch 1 vor. Weitere, vorteilhafte Eigenschaften der erfindungsgemäßen kohlenstofffaserhaltigen Partikel sind Gegenstand der diesbezüglichen Unteransprüche.

Weiterer Gegenstand der vorliegenden Erfindung ist ein Verfahren zur Herstellung der erfindungsgemäßen kohlenstofffaserhaltigen Partikel, wie sie in dem entsprechenden, auf das Verfahren zur Herstellung der kohlenstofffaserhaltigen Partikel selbst gerichteten Anspruch beschrieben bzw. definiert ist.

Schließlich ist ein weiterer Gegenstand der vorliegenden Erfindung die Verwendung der erfindungsgemäßen kohlenstofffaserhaltigen Partikel, wie sie in dem entsprechenden Verwendungsanspruch beschrieben bzw. definiert ist.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Im Übrigen gilt, dass der Fachmann anwendungsbezogen oder einzelfallbedingt von den nachfolgend aufgeführten Zahlen-, Wert- bzw. Bereichsangaben abweichen kann, ohne dass er den Rahmen der vorliegenden Erfindung verlässt.

Gegenstand der vorliegenden Erfindung - gemäß einem **ersten** Aspekt der vorliegenden Erfindung - sind somit kohlenstofffaserhaltige Partikel, vorzugweise in Form von Granulaten oder Pellets, welche sich insbesondere für die Herstellung von kohlenstofffaserhaltigen Materialien, vorzugsweise kohlenstofffaserhaltigen Kunststoffen, eignen,
wobei die kohlenstofffaserhaltigen Partikel
- Kohlenstofffasern, insbesondere in zerkleinerter Form, und
- mindestens ein silan- und/oder siloxanbasiertes Bindemittel
enthalten,
wobei die Kohlenstofffasern als rezyklierte Kohlenstofffasern vorliegen, wobei die rezyklierten Kohlenstofffasern aus kohlenstofffaserverstärkten Kunststoffen (CFK) pyrolytisch und/oder mittels pyrolytischer Zersetzung der Kunststoffmatrix gewonnen sind.

Der Begriff des Partikels - synonym auch als Teilchen bezeichnet - wie er im Rahmen der vorliegenden Erfindung verwendet wird, bezeichnet insbesondere diskrete bzw. abgrenzbare Objekte bzw. Formkörper, welche aus einer Vielzahl von miteinander verbundenen, vorzugsweise gleichartigen bzw. identischen Bestandteilen (hier konkret: insbesondere zerkleinerten Kohlenstofffasern) bestehen und insbesondere eine Ausdehnung im Bereich von Bruchteilen von Millimetern bis hin zu einigen Millimetern oder sogar Zentimetern in alle Richtungen des Raumes aufweisen können. Insbesondere bestehen die Partikel im Rahmen der vorliegenden Erfindung aus einer Vielzahl von vorzugsweise zerkleinerten Kohlenstofffasern, welche miteinander zu den jeweiligen Partikeln verbunden sind. Im Rahmen der vorliegenden Erfindung ist es jedoch nicht ausgeschlossen, dass die diskreten Partikel jeweils auch untereinander bzw. miteinander (lose) verbunden, insbesondere agglomeriert, sind.

Weiterhin bezeichnet der Begriff des Granulats, wie er im Rahmen der vorliegenden Erfindung verwendet wird, insbesondere zuvor beschriebene Partikel undefinierter Form bzw. Geometrie, welche aus festen Bestandteilen (vorliegend aus vorzugsweise zerkleinerten Kohlenstofffasern) bestehen, wobei jedes Partikel jeweils miteinander verbundene bzw. vernetzte Kohlenstofffasern enthält. Insbesondere weist jedes Granulatteilchen genügend Festigkeit auf, um unterschiedliche Handhabungen und Verwendungen zu gewährleisten. Granulate werden durch an sich bekannte Verfahren der sogenannten Granulation hergestellt, wobei verschiedene Verfahren, wie insbesondere Wirbelschichtgranulation, Trommelgranulation oder dergleichen, zum Einsatz kommen können.

Der Begriff des Pellets, wie er im Rahmen der vorliegenden Erfindung verwendet wird, bezeichnet insbesondere Partikel aus verdichteten, miteinander verbundenen Bestandteilen (vorliegend aus vorzugsweise zerkleinerten Kohlenstofffasern) mit definierter Form bzw. Geometrie, insbesondere in Korn-, Kugel- oder Zylinderform. Im Allgemeinen wird der Begriff im Plural gebraucht, da Pellets nicht einzeln, sondern in größeren Mengen verwendet werden. Pellets werden durch an sich bekannte, der Verfahrenstechnik der Agglomeration zugeordnete Verfahren hergestellt, welche auch als Pelletierung bzw. Pelletierverfahren bezeichnet werden.

Schließlich ist unter dem Begriff des silan- und/oder siloxanbasierten Bindemittels, wie er im Rahmen der vorliegenden Erfindung verwendet wird, ein Bindemittel zu verstehen, welches mindestens ein Silan und/oder mindestens ein Siloxan enthält oder hieraus besteht. Ein solches Produkt ist dem Fachmann als solches hinlänglich bekannt und kommerziell verfügbar, wurde bislang für die erfindungsgemäße Anwendung aber noch nicht in Betracht gezogen.

Unter dem Begriff der Silane, wie er im Rahmen der vorliegenden Erfindung verwendet wird, sind bekanntermaßen insbesondere solche Verbindungen zu verstehen, welche im Fall monomerer Silane mindestens vierbindiges Siliciumatom aufweisen und im Fall oligomerer oder polymerer Silane ein Grundgerüst auf Basis von Siliciumatomen (-Si-Si-) umfassen. Dabei sind jeweils die freien Valenzen des oder der Siliciumatome mit organischen Resten substituiert. Somit kann das erfindungsgemäß eingesetzte silanbasierte Bindemittel bzw. das erfindungsgemäß eingesetzte Silan synonym auch als siliciumorganische Verbindung oder aber auch als (Organo-)Silanderivat oder aber als Organosilan oder aber als organisch substituiertes Silan bezeichnet werden. Die erfindungsgemäß eingesetzten (Organo-)Silane können grundsätzlich aus monomeren, oligomeren oder polymeren (Organo-)Silanen sowie deren Mischungen ausgewählt sein. Im Fall monomerer Silane sind bekanntermaßen alle vier Wasserstoffatome des Silangrundköpers (d. h. SiH₄) durch organische Reste ersetzt sind, während im Fall oligomerer oder polymerer Silane bekanntermaßen ein oligomeres oder polymeres (Si-Si)-Grundgerüst vorliegt, bei welchem die freien Valenzen der Siliciumatome jeweils mit organischen Resten substituiert sind.

Unter dem Begriff der Siloxane, wie er im Rahmen der vorliegenden Erfindung verwendet wird, sind bekanntermaßen insbesondere solche Verbindungen zu verstehen, welche mindestens ein (Si-O-Si)-Grundgerüst umfassen. Dabei sind die freien Valenzen der Siliciumatome jeweils mit organischen Resten substituiert. Somit kann das erfindungsgemäß eingesetzte siloxanbasierte Bindemittel bzw. das erfindungsgemäß eingesetzte Siloxan synonym auch als (Organo-)Siloxanderivat oder aber als Organosiloxan oder aber als organisch substituiertes Siloxan bezeichnet werden. Die erfindungsgemäß eingesetzten (Organo-)Siloxane können grundsätzlich aus monomeren, oligomeren oder polymeren (Organo-)Siloxane sowie deren Mischungen ausgewählt sein. Im Fall polymerer (Organo-)Siloxane wird synonym auch die Bezeichnung Polysiloxane oder Silikone verwendet. Insbesondere weisen solche Polysiloxane ein Grundgerüst vom Typ -(SiR₂-O)ₙ- bzw. R₃Si-(O-SiR₂)ₘ-O-SiR₃ aufweisen, wobei die Reste bzw. Substituenten R, gleich oder verschieden, unabhängig voneinander jeweils einen organischen Rest bezeichnen und die Variablen n bzw. m ganze Zahlen größer 1 bzw. größer oder gleich 1 darstellen.

Insbesondere kann das erfindungsgemäß eingesetzte silan- und/oder siloxanbasierte Bindemittel mindestens ein Organosilan, ausgewählt aus monomeren, oligomeren oder polymeren Organosilanen, und/oder mindestens ein Organosiloxan, ausgewählt aus monomeren, oligomeren oder polymeren Organosiloxanen, enthalten (z. B. zusammen mit mindestens einem Löse- oder Dispergiermittel und/oder mindestens einem Additiv) oder hieraus bestehen.

Eine Besonderheit der erfindungsgemäßen kohlenstofffaserhaltigen Partikel, insbesondere in Form von Pellets oder Granulaten, ist insbesondere darin zu sehen, dass sich im Rahmen der Erfindung unter Verwendung eines silan- und/oder siloxanbasierten Bindemittels stabile Partikel mit vorzugsweise zerkleinerten Kohlenstofffasern herstellen lassen, welche sich überraschenderweise jedoch ohne Weiteres als Zuschlagstoffe bzw. Additive in Kunststoffe einarbeiten lassen (insbesondere mittels Compoundierung), wobei die erfindungsgemäßen Partikel insbesondere bei Einarbeitung in eine Kunststoffmatrix deren rheologischen Eigenschaften, insbesondere deren Fließfähigkeit, zumindest im Wesentlichen nicht beeinträchtigen, so dass das resultierende Material ohne verfahrenstechnische Probleme weiterverarbeitet werden kann (z B. mittels Spritzgießen oder dergleichen). Die erfindungsgemäßen Partikel ermöglichen somit in überraschender Weise gleichermaßen eine homogene Inkorporierung in eine Kunststoffmatrix, was - ohne sich auf eine bestimmte Theorie festlegen zu wollen - offenbar darauf zurückzuführen ist, dass das silan- und/oder siloxanbasierte Bindemittel im Partikelzustand, insbesondere im Pellet- oder Granulatzustand, einen stabilen Verbund der einzelnen, vorzugsweise zerkleinerten Kohlenstofffasern gewährleistet, aber andererseits dieser Verbund in einer fließfähigen bzw. heißen Kunststoffmatrix ohne Weiteres wieder aufgelöst werden kann. Mit anderen Worten wird eine äußerst homogene Einarbeitung der kohlenstofffaserhaltigen Partikel dadurch erreicht, dass das silan- und/oder siloxanbasierte Bindemittel einerseits eine gute Separierung bzw. Freisetzung der Kohlenstofffasern aus den Partikeln, insbesondere den Pellets oder Granulaten, erlaubt und andererseits eine effiziente Wechselwirkung sowohl mit den Kohlenstofffasern als auch mit der Kunststoffmatrix erreicht wird, so dass eine stabile wie homogene Inkorporierung der Kohlenstofffasern in die Kunststoffmatrix gewährleistet ist. Dies unterscheidet das erfindungsgemäß eingesetzte silan- und/oder siloxanbasierte Bindemittel von möglichen anderen Bindemitteln, insbesondere solchen auf Basis von polymeren organischen Harzen (z. B. Polyurethan-, Epoxid-, Polyacrylatharzen etc.), da letztgenannte Bindemittel - wie die Untersuchungen der Anmelderin überraschend gezeigt haben - keine zufriedenstellend homogene Inkorporierung in eine Kunststoffmatrix ermöglichen und zudem zu einer signifikanten Beeinträchtigung der rheologischen Eigenschaften, insbesondere der Fließfähigkeit, der Kunststoffmatrix bei ihrer Einarbeitung führen.

Gemäß der vorliegenden Erfindung können die kohlenstofffaserhaltigen Partikel zumindest im Wesentlichen staubfrei, bevorzugt (vollkommen) staubfrei, ausgebildet sein. Somit weisen die erfindungsgemäßen kohlenstofffaserhaltigen Partikel gegenüber Kohlenstofffasern in bindemittelfreier Form eine signifikant verbesserte Handhabung bei Herstellung und Verwendung auf. Insbesondere wird auch eine Gesundheitsgefährdung aufgrund von Staubentwicklung bei Herstellung und Verarbeitung in effizienter Weise vermieden. Weiterhin wird auch das Risiko von Staubexplosionen bei Verwendung der erfindungsgemäßen kohlenstofffaserhaltigen Partikel vermieden; somit sind aufwendige Filteranlagen, wie sie bei Verwendung von pulverförmigen, zu Staubbildung neigenden Zuschlagstoffen unerlässlich sind, bei Verwendung der erfindungsgemäßen Partikel nicht erforderlich. Zudem wird durch die staubfreie Ausbildung eine verbesserte Dosierbarkeit sowie Einarbeitungseffizienz bei Verwendung der erfindungsgemäßen kohlenstofffaserhaltigen Partikel erreicht, da keinerlei Rückstände an Verpackungen oder Maschinenteilen zurückbleiben und ein Entweichen der Zuschlagstoffe in Form von Staub während der Zudosierung im Rahmen der Compoundierung vermieden wird.

Erfindungsgemäß kann es vorgesehen sein, dass die Kohlenstofffasern innerhalb der Partikel eine isotrope und/oder multidirektionale und/oder zufallsorientierte Ausrichtung aufweisen. Der Begriff "isotrop", wie er im Rahmen der vorliegenden Erfindung verwendet wird, bezeichnet die Unabhängigkeit einer Eigenschaft (vorliegend der Festigkeit bzw. Steifigkeit der Kohlenstofffasern) von einer bestimmten Richtung. Der Begriff "multidirektional" bezeichnet die Ausrichtung in alle Raumrichtungen, während der Begriff "zufallsorientiert" die stochastische bzw. statistische, d. h. von außen nicht vorgegebene Ausrichtung bezeichnet. Somit weisen die Kohlenstofffasern innerhalb eines einzelnen Partikels eine Vielzahl von verschiedenen (räumlichen) Ausrichtungen auf und sind nicht alle in einer einzigen Ausrichtung angeordnet. Durch die isotrope Ausrichtung der Kohlenstofffasern innerhalb der einzelnen Partikel ist auch eine nachfolgende isotrope und/oder multidirektionale Verteilung der Kohlenstofffasern innerhalb des Verbundstoffs, insbesondere des Kunststoffs, möglich, in welchem die Kohlenstofffasern letztendlich eingearbeitet werden sollen. Folglich können bei Verwendung der erfindungsgemäßen kohlenstofffaserhaltigen Partikel, insbesondere Pellets oder Granulate, Verbundstoffe erhalten werden, welche eine Verbesserung der mechanischen Eigenschaften, insbesondere der Steifigkeit und der Zugfestigkeit, in alle Richtungen aufweisen. Es kann jedoch auch vorgesehen sein, dass die Kohlenstofffasern vor oder während der Einarbeitung in die Kunststoffmatrix monodirektional ausgerichtet werden, obwohl eine solche Ausführungsform erfindungsgemäß weniger bevorzugt ist. Erfindungsgemäß ist es vorgesehen, dass die Kohlenstofffasern als rezyklierte Kohlenstofffasern vorliegen. In diesem Zusammenhang ist es erfindungsgemäß vorgesehen, dass die rezyklierten Kohlenstofffasern aus kohlenstofffaserverstärkten Kunststoffabfällen (CFK-Abfälle) gewonnen werden, insbesondere pyrolytisch und/oder mittels pyrolytischer Zersetzung der Kunststoffmatrix der CFK-Abfälle in einem Pyrolyseofen. Die pyrolytische Zersetzung der Kunststoffmatrix ist dabei im Wesentlichen vollständig, d. h. es werden nach der Rezyklierung ausschließlich Kohlenstofffasern ohne Kunststoffmatrix erhalten. Ein geeignetes Verfahren zur Herstellung rezyklierter Kohlenstofffasern wird beispielsweise in den zu derselben Patentfamilie gehörenden Druckschriften WO 2009/090264 A1, EP 2 152 487 B1 sowie US 2010/189629 A1 beschrieben. Die zur Herstellung der rezyklierten Kohlenstofffasern eingesetzten kohlenstofffaserverstärkten Kunststoffabfälle (CFK-Abfälle) fallen insbesondere bei der Herstellung von Flugzeugteilen und Teilen für Windkrafträder (z. B. in Form von Schnittresten) an. Im Rahmen der vorliegenden Erfindung können jedoch auch kohlenstofffaserverstärkte Kunststoffteile (CFK-Teile) verwendet werden, welche aufgrund von Brüchen oder Rissen innerhalb des Materials entsorgt werden müssen. Auch können als Ausgangsmaterialien für die Herstellung der rezyklierten Kohlenstofffasern CFK-haltige Materialien bzw. CFK-haltige Kunststoffabfälle auf Basis von zu entsorgenden Modellformen, Produktionsabfall, Prototypen, Fehlchargen und sogenannten "End-of-life"-Komponenten verwendet werden.

Die erfindungsgemäßen Partikel aus rezyklierten Kohlenstofffasern haben gegenüber Partikeln aus Kohlenstoffprimärfasern (synonym auch als Kohlenstoffrohfasern oder virgin fibres bezeichnet) den Vorteil, dass die rezyklierten Kohlenstofffasern eine bessere Benetzbarkeit und somit eine bessere Einarbeitbarkeit in die Kohlenstoffmatrix aufweisen. Ohne sich auf eine bestimmte Theorie beschränken zu wollen, resultiert die bessere Benetzbarkeit aus den durch das Pyrolyseverfahren bedingten hydrophilen Oberflächeneigenschaften sowie der rauheren Oberfläche der rezyklierten Kohlenstofffasern. Weiterhin ist die Herstellung von rezyklierten Kohlenstofffasern aufgrund des wesentlich geringeren Energieaufwands im Gegensatz zur Herstellung von Primär- bzw. Rohfasern deutlich kostengünstiger durchzuführen, so dass die erfindungsgemäßen kohlenstofffaserhaltigen Partikel wesentlich kostengünstiger und somit kostenökonomischer erhältlich sind als kohlenstofffaserhaltige Partikel aus Primär- bzw. Rohfasern. Darüber hinaus hat die Verwendung von aus kohlenstofffaserverstärkten Kunststoffabfällen (CFK-Abfällen) rezyklierten Kohlenstofffasern den Vorteil, dass diese Abfälle nicht kostenaufwendig entsorgt oder auf Deponien gelagert werden müssen.

Wie durch die Anmelderin im Rahmen von Versuchen überraschend festgestellt, liefern die rezyklierten Fasern aufgrund ihrer besseren Benetzbarkeit gegenüber Primärfasern bessere Ergebnisse in Bezug auf die Einarbeitbarkeit und die Beeinflussung der rheologischen Eigenschaften, insbesondere der Fließeigenschaften, der Kunststoffmatrix.

Im Rahmen der vorliegenden Erfindung kann es insbesondere vorgesehen sein, dass die kohlenstofffaserhaltigen Partikel in rieselfähiger Form bzw. in Form eines rieselfähigen Materials vorliegen. Die Rieselfähigkeit der erfindungsgemäßen kohlenstofffaserhaltigen Partikel gewährleistet eine gute Dosierbarkeit und Einarbeitbarkeit, insbesondere durch eine Vermeidung der Anhaftung der Partikel an Gefäßwänden oder Maschinenteilen. Somit wird sichergestellt, dass die erfindungsgemäßen kohlenstofffaserhaltigen Partikel auch in industriell und kontinuierlich betriebenen Compoundiervorrichtungen verwendet werden können und sich gleichbleibend und homogen in die Kunststoffmatrix einarbeiten lassen, so dass Verbundstoffe auf Basis von Kunststoffen mit gleichbleibender Qualität erhalten werden.

Im Allgemeinen kann die Schüttdichte der erfindungsgemäßen Partikel, insbesondere in Granulat- oder Pelletform, in weiten Bereichen variieren. Insbesondere weisen die kohlenstofffaserhaltigen Partikel eine Schüttdichte im Bereich von 150 bis 750 g/l, insbesondere im Bereich von 175 bis 700 g/l, vorzugsweise im Bereich von 180 bis 600 g/l, auf. Dennoch kann es anwendungsbezogen oder einzelfallbedingt erforderlich sein, von den vorgenannten Werten abzuweichen, ohne dass der Rahmen der vorliegenden Erfindung verlassen ist.

Was die Bestimmung der Schüttdichte anbelangt, so kann diese insbesondere nach ASTM B527-93/00 oder alternativ nach ISO 697/EN ISO 60 bzw. DIN 53468 bestimmt werden.

Aufgrund der relativ hohen Schüttdichte der erfindungsgemäßen kohlenstofffaserhaltigen Partikel wird insbesondere der Lager- und Transportaufwand signifikant verringert, da die erfindungsgemäßen Partikel, insbesondere Pellets oder Granulate, in wesentlich größeren Mengen transportiert und gelagert werden können.

Gemäß einer bevorzugten Ausführungsform ist es im Rahmen der vorliegenden Erfindung vorgesehen, dass die Kohlenstofffasern in zerkleinerter Form, insbesondere in gehackter und/oder gemahlener Form, vorliegen. Das Hacken der Kohlenstofffasern kann in einer hierfür üblichen, dem Fachmann an sich bekannten, Schneidevorrichtung erfolgen, wobei das Hacken grundsätzlich mittels Nass- oder Trockenverfahren durchgeführt werden kann. Durch mehrfache Zerkleinerung, insbesondere mehrfaches Hacken, können die Faserlängen der Kohlenstofffasern auf die entsprechende Länge eingestellt werden. In diesem Zusammenhang kann es vorgesehen sein, dass zur Herstellung der gemahlenen Kohlenstofffasern zuvor gehackte Kohlenstofffasern verwendet werden; die gemahlenen Kohlenstofffasern können durch ein Vermahlen der gehackten Kohlenstofffasern, insbesondere unter Verwendung einer Hammermühle, Pralltellermühle, Siebkorbmühle oder dergleichen, erhalten werden.

In erfindungsgemäß bevorzugter Weise können die Kohlenstofffasern in den erfindungsgemäßen kohlenstofffaserhaltigen Partikeln eine mittlere Faserlänge im Bereich von 0,1 bis 5.000 µm, insbesondere 1 bis 4.500 µm, vorzugsweise 10 bis 4.000 µm, bevorzugt 50 bis 3.500 µm, besonders bevorzugt 75 bis 3.250 µm, aufweisen. Die Faserlänge der Kohlenstofffasern in gehackter Form ist hierbei üblicherweise größer als die Faserlänge der Kohlenstofffasern in gemahlener Form. Dies ist für den Fachmann jedoch selbstverständlich.

Was die Bestimmung der Faserlänge und des Faserdurchmessers im Allgemeinen anbelangt, so kann diese anhand von dem Fachmann an sich wohlbekannten Verfahren vorgenommen werden. Insbesondere können die Faserlänge und der Faserdurchmesser im Allgemeinen mit Bestimmungsverfahren auf Basis von Lichtbeugung, insbesondere Röntgenbeugung und/oder Laserdiffraktometrie, oder aber lichtmikroskopisch, elektronenmikroskopisch oder dergleichen bestimmt werden. Darüber hinaus kann die Bestimmung der Faserlängen und Faserdurchmesser im Millimeterbereich auch mittels Siebanalyse nach DIN 66165 erfolgen. Insbesondere beziehen sich die zuvor angeführten Größenangaben auf eine zumindest im Wesentlichen faserförmige Grundstruktur. Weiterhin wird auf die nachfolgenden Ausführungen zur Größenbestimmung verwiesen.

Darüber hinaus kann es erfindungsgemäß vorgesehen sein, dass die Kohlenstofffasern einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen. In diesem Zusammenhang kann es erfindungsgemäß vorgesehen sein, dass die gehackten und/oder gemahlenen Kohlenstofffasern einen ähnlichen bzw. vergleichbaren bzw. identischen Faserdurchmesser aufweisen. Der Faserdurchmesser kann insbesondere durch lichtmikroskopische und/oder elektronenmikroskopische Bestimmungsmethoden ermittelt werden.

Gemäß einer bevorzugten Ausführungsform können die kohlenstofffaserhaltigen Partikel das silan- und/oder siloxanbasierte Bindemittel in einer Menge von 0,1 bis 40 Gew.-%, insbesondere 0,5 bis 30 Gew.-%, vorzugsweise 1 bis 20 Gew.-%, besonders bevorzugt 2 bis 15 Gew.-%, ganz besonders bevorzugt 3 bis 10 Gew.-%, bezogen auf die kohlenstofffaserhaltigen Partikel, aufweisen. Im Rahmen der vorliegenden Erfindung sollte also eine gewisse Mindestmenge an silan- und/oder siloxanbasiertem Bindemittel verwendet werden, um die einzelnen Kohlenstofffasern zu stabilen Pellets oder Granulaten zu verbinden bzw. zu vernetzen; jedoch sollte die Bindemittelmenge nicht die vorgenannte Obergrenze überschreiten, um eine gute Einarbeitung insbesondere in Kunststoffe zu ermöglichen.

Zudem können die kohlenstofffaserhaltigen Partikel Kohlenstofffasern in einer Menge von 60 bis 99,9 Gew.-%, insbesondere 70 bis 99,5 Gew.-%, vorzugsweise 80 bis 99 Gew.-%, besonders bevorzugt 85 bis 98 Gew.-%, ganz besonders bevorzugt 90 bis 97 Gew.-%, bezogen auf die kohlenstofffaserhaltigen Partikel, aufweisen. Wie oben bereits in Bezug auf das silan- und/oder siloxanbasierte Bindemittel ausgeführt, sollte auch der Anteil an Kohlenstofffasern im Rahmen der vorliegenden Erfindung eine gewisse Höchstmenge nicht überschreiten, da andernfalls aufgrund des hohen Anteils an Kohlenstofffasern keine stabilen Partikel mehr erhalten werden können; andererseits ist eine gewisse Mindestmenge erforderlich, um bei Einarbeitung insbesondere in Kunststoffe einen ausreichenden Effekt zu erzielen.

Darüber hinaus kann es vorgesehen sein, dass die kohlenstofffaserhaltigen Partikel eine Vielzahl von Kohlenstofffasern, insbesondere mindestens 10 Kohlenstofffasern, vorzugsweise mindestens 25 Kohlenstofffasern, bevorzugt mindestens 50 Kohlenstofffasern, besonders bevorzugt mindestens 75 Kohlenstofffasern, ganz besonders bevorzugt mindestens 100 Kohlenstofffasern, pro Partikel aufweisen.

In diesem Zusammenhang kann es zudem vorgesehen sein, dass die kohlenstofffaserhaltigen Partikel eine Vielzahl von Kohlenstofffasern, insbesondere 10 bis 1.000.000 Kohlenstofffasern, vorzugsweise 25 bis 500.000 Kohlenstofffasern, bevorzugt 50 bis 100.000 Kohlenstofffasern, besonders bevorzugt 75 bis 50.000 Kohlenstofffasern, ganz besonders bevorzugt 100 bis 10.000 Kohlenstofffasern, pro Partikel aufweisen.

Was das silan- und/oder siloxanbasierte Bindemittel anbelangt, so kann es im Rahmen der vorliegenden Erfindung vorgesehen sein, dass das silan- und/oder siloxanbasierte Bindemittel die Kohlenstofffasern eines einzelnen Partikels zusammenhält und/oder miteinander verbindet, insbesondere miteinander vernetzt und/oder benetzt, vorzugsweise derart, dass Partikel resultieren und/oder die Kohlenstofffasern jeweils zu einzelnen Partikeln zusammengeführt und/oder verbunden sind. Durch den erfindungsgemäßen Einsatz des silan- und/oder siloxanbasierten Bindemittels werden die Kohlenstofffasern untereinander verbunden bzw. miteinander vernetzt, so dass stabile Partikel, insbesondere Pellets oder Granulate, erhalten werden. Gleichzeitig ermöglicht das silan- und/oder siloxanbasierte Bindemittel jedoch eine Auflösung der Pellet- oder Granulatform in die einzelnen Kohlenstofffasern bei Zugabe zu einer fließfähigen bzw. verflüssigten Kunststoffmasse, so dass eine homogene Einarbeitung gewährleistet ist. Ein trockenes Verpressen der Kohlenstofffasern ohne Bindemittel zu einzelnen Partikeln würde - abgesehen von einer unzureichenden Stabilität der resultierenden Partikel - zu einer signifikanten unerwünschten Verkürzung der Länge bzw. Zerkleinerung der Kohlenstofffasern und damit zu den oben im Zusammenhang mit der Verwendung von hohen Scherkräften geschilderten Problemen führen.

Weiterhin kann das silan- und/oder siloxanbasierte Bindemittel insbesondere ausgewählt und/oder ausgebildet sein derart, dass es zur Ausbildung von physikalischen und/oder chemischen Bindungen, insbesondere chemischen Bindungen, mit einer Kunststoffmatrix imstande ist.

In diesem Zusammenhang kann es vorgesehen sein, dass das silan- und/oder siloxanbasierte Bindemittel (d. h. das Silan und/oder Siloxan des Bindemittels) mindestens eine polare und/oder hydrophile Gruppe aufweist, welche insbesondere ausgewählt sein kann aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und/oder Ammoniumgruppen, insbesondere Aminogruppen und/oder Hydroxylgruppen, vorzugsweise primären Aminogruppen, sekundären Aminogruppen, tertiären Aminogruppen und/oder Hydroxylgruppen. Die polaren und/oder hydrophilen Gruppen des silan- und/oder siloxanbasierten Bindemittels gewährleisten eine Wechselwirkung mit den Kohlenstofffasern, so dass stabile Partikel, insbesondere Pellets oder Granulate, resultieren. Weiterhin wird durch die Wechselwirkung des silan- und/oder siloxanbasierten Bindemittels mit der Kunststoffmatrix des Verbundstoffs eine homogene und stabile Einarbeitung der erfindungsgemäßen kohlenstofffaserhaltigen Partikel ermöglicht. Zudem erlaubt eine Anpassung der polaren und/oder hydrophilen Gruppe des silan- und/oder siloxanbasierten Bindemittels an die jeweilige Kunststoffmatrix eine gezielte Einstellung der Eigenschaften der erfindungsgemäßen kohlenstofffaserhaltigen Partikel in Bezug auf die jeweils einzusetzende Kunststoffmatrix, so dass stets eine optimale und homogene Einarbeitbarkeit und Verteilung der Kohlenstofffasern innerhalb der Kunststoffmatrix gewährleistet ist. Somit können die kohlenstofffaserhaltigen Partikel universell und unabhängig von der jeweiligen Kunststoffmatrix verwendet werden.

Gemäß einer bevorzugten Ausführungsform kann es vorgesehen sein, dass das silan- und/oder siloxanbasierte Bindemittel mindestens ein Alkoxysilan, insbesondere ein mindestens eine polare und/oder hydrophile Gruppe enthaltendes Alkoxysilan, oder dessen Oligomer ist oder enthält, wobei die polare und/oder hydrophile Gruppe insbesondere ausgewählt sein kann aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und/oder Ammoniumgruppen, insbesondere Aminogruppen und/oder Hydroxylgruppen, vorzugsweise primären Aminogruppen, sekundären Aminogruppen, tertiären Aminogruppen und/oder Hydroxylgruppen.

Besonders gute Ergebnisse im Rahmen der vorliegenden Erfindung werden erhalten, wenn das silan- und/oder siloxanbasierte Bindemittel mindestens ein Alkoxysilan, insbesondere ein mindestens eine Aminogruppe enthaltendes Alkoxysilan, vorzugsweise ein Aminoalkylalkoxysilan, oder dessen Oligomer ist oder enthält.

Zudem kann es auch vorgesehen sein, dass das silan- und/oder siloxanbasierte Bindemittel mindestens eine sich von 1,2-Ethylendiamin ableitende Einheit enthält.

Weiterhin kann es vorgesehen sein, dass das silan- und/oder siloxanbasierte Bindemittel mindestens eine Alkoxygruppe, insbesondere eine Methoxy-, Ethoxy- oder Propoxygruppe, bevorzugt am Silciumatom, enthält.

Bevorzugt kommen erfindungsgemäß niedermolekulare oder allenfalls oligomere Silane als Bindemittel zum Einsatz. Insbesondere kann das silan- und/oder siloxanbasierte Bindemittel in einem solchen Fall (d. h. wenn das silan- und/oder siloxanbasierte Bindemittel ein niedermolekulares oder allenfalls oligomeres Silan enthält oder hieraus besteht) ein Molekulargewicht im Bereich von 100 bis 10.000 g/mol, insbesondere 150 bis 7.500 g/mol, vorzugsweise 175 bis 5.000 g/mol, besonders bevorzugt 200 bis 2.500 g/mol, aufweisen. Es hat sich gezeigt, dass besonders gute Ergebnisse im Rahmen der vorliegenden Erfindung erhalten werden, wenn das Molekulargewicht des silan- und/oder siloxanbasierten Bindemittels in einem solchen Fall (d. h. wenn das silan- und/oder siloxanbasierte Bindemittel ein niedermolekulares oder allenfalls oligomeres Silan enthält oder hieraus besteht) in dem vorgenannten Bereich liegt. In Bezug auf die Bestimmung des Molekulargewichts kann auf dem Fachmann im Allgemeinen bekannte Methoden wie die Gelpermeationschromatographie (GPC), insbesondere die Gelpermeationschromatographie gemäß DIN 55672, bevorzugt unter Verwendung von Polystyrol und/oder Polymethacrylat als internem Standard, verwiesen werden. Im Fall polymerer Verbindungen beziehen sich die vorgenannten Molekulargewichtsangaben auf mittlere, insbesondere gewichtsmittlere Molekulargewichtsangaben.

Besonders gute Ergebnisse im Rahmen der vorliegenden Erfindung werden erhalten, wenn das silan- und/oder siloxanbasierte Bindemittel mindestens eine Verbindung der allgemeinen Formel (I)

(R¹)(R²)N-[CH₂]ₙ-N(R³)(R⁴) (I)

oder deren Oligomer enthält oder darstellt oder hieraus besteht,
wobei in der allgemeinen Formel (I) die Variable n für eine ganze Zahl von 1 bis 10, vorzugsweise 2, steht und die Reste R¹, R², R³ und R⁴, jeweils unabhängig voneinander, Wasserstoff oder einen organischen Rest R bezeichnen, jedoch mit der Maßgabe, dass R¹, R², R³ und R⁴ nicht alle gleichzeitig Wasserstoff darstellen und/oder dass mindestens ein Rest R¹, R², R³ und R⁴ von Wasserstoff verschieden ist,
wobei der organische Rest R der allgemeinen Formel

-X-Si(O R')(OR")(OR"')

entspricht, wobei der Rest X einen divalenten organischen Rest, insbesondere eine Alkylengruppe, vorzugsweise eine Methylen-, Ethylen-, Propylen- oder Butylengruppe, darstellt und die Reste R', R" und R"', jeweils unabhängig voneinander, einen Alkylrest, insbesondere einen Methyl-, Ethyl- oder Propylrest, vorzugsweise einen Methyl- oder Ethylrest, darstellen.

Gemäß einer weiteren bevorzugten Ausführungsform kann es vorgesehen sein, dass das silan- und/oder siloxanbasierte Bindemittel mindestens ein (Organo-)Siloxan, insbesondere wie zuvor beschrieben, vorzugsweise mindestens ein Poly(organo)siloxan, enthält bzw. hieraus besteht.

Bevorzugt sind Polysiloxane (d. h. synonym Polyorganosiloxane), bevorzugt Polydimethylsiloxane, insbesondere vorzugsweise linear ausgebildete reaktive und/oder modifizierte Polysiloxane bzw. Polydimethylsiloxane, bevorzugt solche mit funktionalen (z. B. polaren und/oder hydrophilen) Gruppen, insbesondere mit funktionalen endständigen Gruppen, insbesondere ausgewählt aus Aminogruppen, Alkoxygruppen, Aryloxygruppen, Aralkyloxygruppen, Acryloxygruppen, Hydroxylgruppen, Thiolgruppen, Halogenen, Carboxylsäuregruppen, Carbonsäureestergruppen, Epoxidgruppen, Carbonylgruppen, (Poly-)-Ethergruppen, (Poly-)Estergruppen und/oder Ammoniumgruppen.

Nichtbeschränkende Beispiele für erfindungsgemäße geeignete (Organo-)Siloxane sind z. B. Dicarboxyalkylpolydimethylsiloxane, Diepoxyalkylpolydimethylsiloxane, Dihydroxyalkylpolydimethylsiloxane, Diacryloxyalkylpolydimethylsiloxane, lineare organofunktionale Polysiloxane, polyestermodifizierte (Poly-)Siloxane, lineare organofunktionelle Polysiloxane mit Aminogruppen, aminoalkylfunktionalisierte Polydimethylsiloxane etc.

Für den Fall, dass das silan- und/oder siloxanbasierte Bindemittel mindestens ein (Organo-)-Siloxan, insbesondere wie zuvor beschrieben, vorzugsweise mindestens ein Poly(organo)-siloxan, enthält bzw. hieraus besteht, ist es bevorzugt, wenn das silan- und/oder siloxanbasierte Bindemittel (d. h. also das (Organo-)Siloxan, vorzugsweise das Poly(organo)siloxan) ein Molekulargewicht im Bereich von 500 bis 100.000 g/mol, insbesondere 750 bis 50.000 g/mol, vorzugsweise 1.000 bis 25.000 g/mol, besonders bevorzugt 1.250 bis 15.000 g/mol, aufweist. Es hat sich gezeigt, dass besonders gute Ergebnisse im Rahmen der vorliegenden Erfindung erhalten werden, wenn das Molekulargewicht des silan- und/oder siloxanbasierten Bindemittels in einem solchen Fall (d. h. wenn das silan- und/oder siloxanbasierte Bindemittel mindestens ein (Organo-)Siloxan, insbesondere wie zuvor beschrieben, vorzugsweise mindestens ein Poly(organo)siloxan, enthält bzw. hieraus besteht) in dem vorgenannten Bereich liegt. In Bezug auf die Bestimmung des Molekulargewichts kann auf dem Fachmann im Allgemeinen bekannte Methoden wie die Gelpermeationschromatographie (GPC), insbesondere die Gelpermeationschromatographie gemäß DIN 55672, bevorzugt unter Verwendung von Polystyrol und/oder Polymethacrylat als internem Standard, verwiesen werden. Im Fall polymerer Verbindungen beziehen sich die vorgenannten Molekulargewichtsangaben auf mittlere, insbesondere gewichtsmittlere Molekulargewichtsangaben.

Bevorzugt kommen bei dieser Ausführungsform erfindungsgemäß insbesondere oligomere oder polymere (Organo-)Siloxane oder deren Copolyester als Bindemittel zum Einsatz.

Gleichermaßen besonders gute Ergebnisse werden im Rahmen der vorliegenden Erfindung bei dieser Ausführungsform erhalten, wenn das silan- und/oder siloxanbasierte Bindemittel mindestens eine Verbindung der allgemeinen Formel (II)

R⁵-(CH₂)ₓ-[Si(R⁶)₂-O]ₘ-Si(R⁷)₂-(CH₂)_{y}-R⁸ (II)

enthält oder darstellt oder hieraus besteht,
wobei in der allgemeinen Formel (II)
- die Variable m für eine ganze Zahl von 1 bis 75, insbesondere 5 bis 50, vorzugsweise 7 bis 45, besonders bevorzugt 15 bis 35, steht,
- die Variablen x und y, jeweils unabhängig voneinander, für eine ganze Zahl von 1 bis 10, insbesondere 1 bis 8, vorzugsweise 1 bis 7, bevorzugt 1 bis 4, stehen,
- die Reste R⁵ und R⁸, jeweils unabhängig voneinander, Wasserstoff oder einen organischen Rest, insbesondere einen Arylrest oder einen Alkylrest, insbesondere einen Alkylrest mit 1 bis 10 Kohlenstoffatomen, vorzugsweise mit 1 bis 5 Kohlenstoffatomen, bezeichnen,
- die Reste R⁶ und R⁷, jeweils unabhängig voneinander, eine Epoxidgruppe, eine Aminogruppe, einen Arylrest, einen Alkylrest oder eine Polyestergruppe bezeichnen, insbesondere wobei die Polyestergruppe der allgemeinen Formel

   -[O-C(O)-(CH₂)ₚ]_{q}-OH

   entspricht, wobei die Variablen p und q, jeweils unabhängig voneinander, für eine ganze Zahl von 1 bis 50, insbesondere 2 bis 40, stehen.

Besonders gute Ergebnisse werden auch erhalten, wenn das silan- und/oder siloxanbasierte Bindemittel eine Kombination von mindestens einem Silan und mindestens einem Siloxan, insbesondere wie zuvor definiert, umfasst.

Die Verwendung des silan- und/oder siloxanbasierte Bindemittels, insbesondere der vorgenannten Art und/oder gemäß den obigen Spezifizierungen und Formeln, gewährleistet zum einen eine gute Verbindung bzw. Vernetzung der einzelnen Kohlenstofffasern zu Partikeln vor der Einarbeitung in Kunststoffe (d. h. im Zustand der Granulate oder Pellets) und zum anderen eine gute Einarbeitbarkeit, so dass eine homogene Verteilung der Kohlenstofffasern innerhalb der Kunststoffmatrix des Verbundstoffs resultiert.

Weiterhin kann es erfindungsgemäß vorgesehen sein, dass das silan- und/oder siloxanbasierte Bindemittel außerdem mindestens einen Haftvermittler, insbesondere ausgewählt aus der Gruppe von Harzen und/oder Wachsen, enthält. Ein solcher Haftvermittler, insbesondere auf Basis von Harze und/oder Wachsen, hat zudem den Vorteil, dass der Haftvermittler bei der Herstellung der erfindungsgemäßen kohlenstofffaserhaltigen Partikel, insbesondere der Granulate oder Pellets, abgesehen von einer verbesserten Anfangshaftung, gleichermaßen als (inneres) Gleit- oder Schmiermittel wirkt. Die eingesetzte Menge an Haftungsvermittler kann dabei in weiten Bereichen variieren; insbesondere kann die eingesetzte Menge an Haftungsvermittler, bezogen auf das silan- und/oder siloxanbasierte Bindemittel, im Bereich von 0,01 bis 80 Gew.-%, insbesondere 0,1 bis 50 Gew.-%, vorzugsweise 1 bis 30 Gew.-%, variieren.

Darüber hinaus kann es im Rahmen der vorliegenden Erfindung vorgesehen sein, dass das silan- und/oder siloxanbasierte Bindemittel außerdem mindestens einen weiteren Hilfsstoff enthält; der Hilfsstoff kann insbesondere ausgewählt sein aus der Gruppe von Lösemitteln, Rheologie-modifizierungsmitteln, Entschäumern, pH-Regulatoren, Emulgatoren, Netzmitteln, Füllstoffen und Stabilisatoren. Die vorgenannten Stoffe dienen insbesondere dazu, die Eigenschaften des silan- und/oder siloxanbasierten Bindemittels gezielt an die jeweils zu verwendende Kunststoffmatrix des Verbundstoffs sowie an verschiedene Verwendungen des Verbundstoffs anzupassen.

Im Zusammenhang mit der Erfindung ist es bevorzugt, wenn die kohlenstofffaserhaltigen Partikel als Pellets oder als Granulate vorliegen. Die Verwendung von Pellets oder Granulaten führt zu einer signifikanten Erhöhung der Schüttdichte gegenüber dem Ausgangsmaterial in Form von Kohlenstofffasern, so dass der Lager- und Transportaufwand deutlich sinkt. Weiterhin wird - wie oben bereits ausgeführt - die Staubentwicklung bei der Lagerung, dem Transport sowie der Verarbeitung vermieden. Folglich kann der Einsatz von aufwendigen und kostenintensiven Filtersystemen bei der Herstellung und Verarbeitung der erfindungsgemäßen Partikel, insbesondere Pellets oder Granulate, entfallen. Weiterhin können die erfindungsgemäßen Partikel infolge der Pellet- oder Granulatform und somit infolge der standardisierierten Materialgröße in Vorrichtungen bzw. Fördersystemen, wie z. B. Förderschnecken etc., wie sie üblicherweise im Rahmen des Compoundierverfahrens zum Einsatz kommen, eingesetzt werden.

Gemäß einer ersten besonderen Ausführungsform der vorliegenden Erfindung kann es somit vorgesehen sein, dass die kohlenstofffaserhaltigen Partikel in Form von Granulaten vorliegen.

Besonders gute Ergebnisse werden erhalten, wenn die kohlenstofffaserhaltigen Partikel in Form von Granulaten einen Durchmesser im Bereich von 0,1 bis 40 mm, insbesondere 0,2 bis 30 mm, vorzugsweise 0,4 bis 20 mm, bevorzugt 0,5 bis 10 mm, ganz besonders bevorzugt 0,75 bis 6 mm, aufweisen. Die Bestimmung des Durchmessers kann insbesondere unter Verwendung der Siebanalyse, vorzugsweise nach DIN 66165, bestimmt werden.

Zudem kann es vorgesehen sein, dass die kohlenstofffaserhaltigen Partikel in Form von Granulaten eine Schüttdichte im Bereich von 1 bis 800 g/l, insbesondere 10 bis 700 g/l, vorzugsweise 40 bis 600 g/l, bevorzugt 70 bis 500 g/l, besonders bevorzugt 100 bis 400 g/l, ganz besonders bevorzugt 175 bis 300 g/l, aufweisen. Im Allgemeinen erfolgt die Bestimmung der Schüttdichte, wie oben bereits ausgeführt.

Weiterhin kann es im Rahmen der vorliegenden Erfindung vorgesehen sein, dass die kohlenstofffaserhaltigen Partikel in Form von Granulaten die Kohlenstofffasern in gemahlener Form enthalten. Die gemahlenen Kohlenstofffasern können im Rahmen der vorliegenden Erfindung aus zuvor gehackten Kohlenstofffasern erhalten werden, wobei die zuvor gehackten Kohlenstofffasern dann durch Mahlen, insbesondere unter Verwendung von Mühlen, wie Hammermühlen, Pralltellermühlen, Siebkorbmühlen oder dergleichen, weiter zerkleinert werden können.

Zudem weisen die Kohlenstofffasern der kohlenstofffaserhaltigen Partikel in Form von Granulaten eine mittlere Faserlänge im Bereich von 0,1 bis 1.000 µm, insbesondere 1 bis 800 µm, vorzugsweise 5 bis 500 µm, bevorzugt 10 bis 400 µm, besonders bevorzugt 25 bis 300 µm, ganz besonders bevorzugt 50 bis 250 µm, noch mehr bevorzugt 75 bis 150 µm, auf. Zur Bestimmung der Faserlänge kann auf vorherige Ausführungen verwiesen werden.

Weiterhin kann es vorgesehen sein, dass die Kohlenstofffasern der kohlenstofffaserhaltigen Partikel in Form von Granulaten einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen. Bezüglich der Bestimmung des Faserdurchmessers kann auf vorstehende Ausführungen verwiesen werden.

Gemäß einer weiteren, alternativen Ausführungsform kann es vorgesehen sein, dass die kohlenstofffaserhaltigen Partikel in Form von Pellets, vorzugsweise mit zumindest im Wesentlichen zylindrischer Form, vorliegen. Wie vorstehend bereits ausgeführt, können durch die Pelletierung und der damit einhergehenden Erhöhung der Schüttdichte und der Vermeidung einer Staubentwicklung sowohl der Lager- und Transportaufwand verringert als auch die Handhabbarkeit und Dosierbarkeit verbessert werden.

In diesem Zusammenhang kann es vorgesehen sein, dass die kohlenstofffaserhaltigen Partikel in Form von Pellets einen Durchmesser im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen. Die Bestimmung des Durchmessers der erfindungsgemäßen kohlenstofffaserhaltigen Partikel in Form von Pellets kann insbesondere mittels Siebanalyse gemäß DIN 66165 durchgeführt werden.

Zudem kann es vorgesehen sein, dass die kohlenstofffaserhaltigen Partikel in Form von Pellets eine Länge im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen. Die Bestimmung der Länge der Pellets ist ebenfalls mittels der zuvor beschriebenen Siebanalyse möglich.

Darüber hinaus kann es vorgesehen sein, dass die kohlenstofffaserhaltigen Partikel in Form von Pellets eine Schüttdichte im Bereich von 1 bis 1.000 g/l, insbesondere 10 bis 800 g/l, vorzugsweise 100 bis 700 g/l, bevorzugt 200 bis 600 g/l, besonders bevorzugt 300 bis 500 g/l, ganz besonders bevorzugt 350 bis 475 g/l, aufweisen. Für die Bestimmung der Schüttdichte kann auf vorherige Ausführungen verwiesen werden.

Besonders gute Ergebnisse im Rahmen der vorliegenden Erfindung werden erhalten, wenn die kohlenstofffaserhaltigen Partikel in Form von Pellets die Kohlenstofffasern in gehackter Form enthalten. Das Hacken der Kohlenstofffasern kann mittels einer hierfür üblichen, dem Fachmann an sich bekannten Schneidemaschine, insbesondere mittels Nass- oder Trockenverfahren, erfolgen. Durch mehrfaches Hacken können die gewünschten Faserlängen eingestellt werden.

Weiterhin kann es vorgesehen sein, dass die kohlenstofffaserhaltigen Partikel in Form von Pellets die Kohlenstofffasern in einer mittleren Faserlänge im Bereich von 0,01 bis 100 mm, insbesondere 0,1 bis 50 mm, vorzugsweise 0,2 bis 25 mm, bevorzugt 0,5 bis 15 mm, besonders bevorzugt 1 bis 10 mm, ganz besonders bevorzugt 2 bis 5 mm, aufweisen. Die Bestimmung der mittleren Faserlänge kann mittels der zuvor beschriebenen Methode erfolgen.

Zudem kann es vorgesehen sein, dass die Kohlenstofffasern der kohlenstofffaserhaltigen Partikel in Form von Pellets einen mittleren Faserdurchmesser im Bereich von 0,1 bis 50 mm, vorzugsweise 0,2 bis 25 mm, bevorzugt 0,5 bis 15 mm, besonders bevorzugt 1 bis 10 mm, ganz besonders bevorzugt 2 bis 5 mm, aufweisen. Die Bestimmung des Faserdurchmessers kann durch Bestimmungsmethoden erfolgen, wie sie vorstehend ausgeführt wurden.

Ein weiterer Gegenstand der vorliegenden Erfindung - gemäß einem **zweiten** Aspekt der vorliegenden Erfindung - ist ein Verfahren zur Herstellung der erfindungsgemäßen kohlenstofffaserhaltigen Partikel, wobei Kohlenstofffasern, insbesondere in zerkleinerter Form, zunächst mit mindestens einem silan- und/oder siloxanbasierte Bindemittel in Kontakt gebracht werden und nachfolgend die mit dem silan- und/oder siloxanbasierte Bindemittel in Kontakt gebrachten Kohlenstofffasern zu diskreten Partikeln geformt werden,
wobei die Kohlenstofffasern als rezyklierte Kohlenstofffasern vorliegen, wobei die rezyklierten Kohlenstofffasern aus kohlenstofffaserverstärkten Kunststoffen (CFK) pyrolytisch und/oder mittels pyrolytischer Zersetzung der Kunststoffmatrix gewonnen sind.

Im Zusammenhang mit dem erfindungsgemäßen Verfahren ist es gemäß einer bevorzugten Ausführungsform vorgesehen, dass die Kohlenstofffasern in gehackter und/oder gemahlener Form eingesetzt werden. Je nach gewünschter Form der Kohlenstofffasern erfolgt entweder eine Granulierung oder eine Pelletierung. Bei Einsatz von Kohlenstofffasern in gehackter Form wird bevorzugt eine Pelletierung durchgeführt, während die Kohlenstofffasern in gemahlener Form bevorzugt granuliert werden.

Zudem ist es im Rahmen des erfindungsgemäßen Verfahrens gemäß einer bevorzugten Ausführungsform vorgesehen, dass die Partikel in Form von Pellets oder Granulaten erhalten werden bzw. wobei die Formung der diskreten Partikel mittels Pelletierung oder Granulierung erfolgt. Wie bereits vorstehend ausgeführt, ergeben sich durch die Pelletierung oder Granulierung Vorteile hinsichtlich der Lagerung, der Handhabbarkeit sowie der Dosierbarkeit. Das erfindungsgemäße Verfahren kann in handelsüblichen Pelletiermaschinen und handelsüblichen Granuliertrommeln durchgeführt werden.

Besonders gute Ergebnisse im Rahmen des erfindungsgemäßen Verfahrens werden erhalten, wenn das silan- und/oder siloxanbasierte Bindemittel in einer Menge von 0,1 bis 40 Gew.-%, insbesondere 0,5 bis 30 Gew.-%, vorzugsweise 1 bis 20 Gew.-%, besonders bevorzugt 2 bis 15 Gew.-%, ganz besonders bevorzugt 3 bis 10 Gew.-%, bezogen auf die resultierenden kohlenstofffaserhaltigen Partikel, eingesetzt wird.

Zudem kann es im Rahmen des erfindungsgemäßen Verfahrens vorgesehen sein, dass die diskreten Partikel abschließend getrocknet und/oder gehärtet werden. Die Trocknung und/oder Härtung gewährleistet die Entfernung von etwaigen Lösungsmitteln, welche in dem silan- und/oder siloxanbasierte Bindemittel enthalten sein können, und verhindert auf diese Weise eine etwaige Verunreinigung der Kunststoffmatrix sowie ein Verkleben der Partikel nach der Herstellung.

Für weitergehende Ausführungen zu diesem erfindungsgemäßen Aspekt kann auf die voranstehenden Ausführungen zu den erfindungsgemäßen kohlenstofffaserhaltigen Partikeln verwiesen werden, welche in Bezug auf diesen erfindungsgemäßen Aspekt entsprechend gelten.

Schließlich ist ein weiterer Gegenstand der vorliegenden Erfindung - gemäß einem **dritten** Aspekt der vorliegenden Erfindung - die Verwendung der erfindungsgemäßen kohlenstofffaserhaltigen Partikel insbesondere für Kunststoffe, Baustoffe oder zementäre Systeme.

Insbesondere kann es im Rahmen der vorliegenden Erfindung vorgesehen sein, dass die kohlenstofffaserhaltigen Partikel zur Herstellung von kohlenstofffaserhaltigen Kunststoffen verwendet werden. Im Rahmen der vorliegenden Erfindung können bevorzugt thermoplastische Kunststoffe, thermoplastische Kunststoffmischungen sowie duroplastische Kunststoffe eingesetzt werden. Insbesondere kann der Kunststoff ausgewählt sein aus der Gruppe von Polycarbonatharzen, Polyamidharzen, gesättigten Polyesterharzen, Polyurethanharzen, Polyacetalharzen, Polysulfonharzen, Polyethersulfonharzen (PES), Polyphenylensulfidharzen (PPS), Polystyrolharzen (PS), Polyolefinharzen, Polyvinylchloridharzen, Polyetheretherketonharzen (PEEK), Polyetherimidharzen (PEI), Polyarylenoxidharzen, Polyamidimidharzen, Polyacrylatharzen, Polyimidharzen sowie deren Mischungen und Kombinationen.

In diesem Zusammenhang kann es insbesondere vorgesehen sein, dass die erfindungsgemäßen kohlenstofffaserhaltigen Partikel zur Compoundierung, insbesondere zur Inkorporierung in Kunststoffe, vorgesehen sind. Insbesondere kann durch die Inkorporierung der erfindungsgemäßen kohlenstofffaserhaltigen Partikel eine Veredelung der Kunststoffe und/oder insbesondere eine Verbesserung der mechanischen Eigenschaften erreicht werden.

Für weitergehende Ausführungen zu diesem erfindungsgemäßen Aspekt kann auf die voranstehenden Ausführungen zu den beiden übrigen Erfindungsaspekten verwiesen werden, welche in Bezug auf diesen erfindungsgemäßen Aspekt entsprechend gelten.

Die erfindungsgemäßen kohlenstofffaserhaltigen Partikel, das erfindungsgemäße Verfahren zu ihrer Herstellung sowie deren erfindungsgemäße Verwendung besitzen eine Reihe von Vorteilen, welche die erfindungsgemäßen kohlenstofffaserhaltigen Partikel, das Verfahren zu ihrer Erstellung sowie ihre Verwendung gegenüber dem Stand der Technik auszeichnen:
Die erfindungsgemäßen kohlenstofffaserhaltigen Partikel weisen eine exzellente Handhabbarkeit auf, da sie zumindest im Wesentlichen staubfrei sind und somit keine aufwendigen und kostenintensiven Schutzvorkehrungen in Form von Filtersystemen bei der Herstellung und Verwendung der erfindungsgemäßen Partikel, insbesondere Pellets oder Granulate, getroffen werden müssen.

Weiterhin weisen die erfindungsgemäßen kohlenstofffaserhaltigen Partikel, insbesondere Pellets oder Granulate, eine hohe Fließfähigkeit und Rieselfähigkeit und somit eine gute Dosierbarkeit auf, weshalb sie folglich in automatisierten Zuführ- und Mischvorrichtungen des Standes der Technik ihm Rahmen des Compoundierverfahrens ohne Probleme eingesetzt werden können.

Des Weiteren können die erfindungsgemäßen kohlenstofffaserhaltigen Partikel, insbesondere Pellets oder Granulate, gut in die Kunststoffmatrix eingearbeitet werden, so dass eine homogene Verteilung und damit eine gleichbleibende Qualität des Verbundstoffs gewährleistet ist. Somit wird eine Verschlechterung der Qualität in Folge einer inhomogenen Verteilung der Kohlenstofffasern in der Kunststoffmatrix effektiv vermieden.

Darüber hinaus ist es aufgrund der multidirektionalen bzw. isotropen bzw. zufallsorientierten Ausrichtung der Kohlenstofffasern innerhalb der erfindungsgemäßen kohlenstofffaserhaltigen Partikel, insbesondere Pellets oder Granulate, möglich, Verbundstoffe mit multidirektional ausgerichteten Kohlenstofffasern mittels Compoundierung herzustellen. Somit können gleichbleibende mechanische Eigenschaften, insbesondere in Bezug auf Festigkeit und Steifigkeit, in alle Richtungen des resultierenden Verbundstoffs erhalten werden.

Weiterhin kann durch die multidirektionale Ausrichtung der Kohlenstofffasern innerhalb des Verbundstoffs eine gesteigerte Schlagfestigkeit erreicht werden, da - ohne sich auf eine bestimmte Theorie zu beschränken - eine skelettartige Struktur der Gesamtheit der Kohlenstofffasern, welche durch die multidirektionale Ausrichtung entsteht, die Schlagenergie aufzunehmen und über den resultierenden Verbundstoff zu verteilen imstande ist.

Durch die Verwendung eines silan- und/oder siloxanbasierten Bindemittels zur Herstellung der erfindungsgemäßen kohlenstoffhaltigen Partikel, insbesondere Pellets und Granulate, werden stabile Partikel durch die Vernetzung bzw. Verbindung der Kohlenstofffasern untereinander erhalten. Jedoch kann diese Vernetzung bzw. Verbindung der Kohlenstofffasern bei Einarbeitung der erfindungsgemäßen Partikel in verflüssigte bzw. fließfähige Kunststoffe leicht aufgebrochen werden, so dass eine homogene Einarbeitung der Kohlenstofffasern bei Verwendung der erfindungsgemäßen Partikel resultiert. Das silan- und/oder siloxanbasierte Bindemittel ist zudem in Bezug auf Kunststoffe universell kompatibel und führt insbesondere zu keiner Störung der resultierenden Matrix.

Zudem können die erfindungsgemäßen kohlenstoffhaltigen Partikel äußerst kostengünstig hergestellt werden, da als Ausgangsprodukt rezyklierte Kohlenstofffasern verwendet werden. Diese können aufgrund der wesentlich weniger energieintensiven Rezyklierung, welche weniger als ein Zehntel der Energie zur Herstellung von Kohlenstoffprimärfasern benötigt, sowie des zu geringen Kosten erhältlichen kohlenstofffaserverstärkten Kunststoffabfalls (CFK-Abfalls) signifikant kostengünstiger hergestellt werden als Kohlenstoffprimärfasern.

Weiterhin wird durch die Rezyklierung eine Umweltbelastung durch immer größere Mengen an kohlenstofffaserverstärkten Kunststoffabfällen (CFK-Abfällen), welche insbesondere in Form von Ausschussteilen und Schnittabfällen bei der Produktion von Teilen aus kohlenstofffaserverstärkten Kunststoffen (CFKs) sowie bei der Entsorgung von kohlenstofffaserverstärkten Kunststoffen (CFKs) anfallen, vermieden.

Des Weiteren wurde überraschend gefunden, dass erfindungsgemäße kohlenstoffhaltige Partikel auf Basis von rezyklierten Kohlenstofffasern, insbesondere mittels Pyrolyse rezyklierten Kohlenstofffasern (mit CFK-haltigen Kunststoffmaterialien als Ausgangsmaterialien), im Vergleich zu erfindungsgemäßen kohlenstoffhaltigen Partikel auf Basis von Kohlenstoffprimärfasern eine noch bessere Einarbeitbarkeit in Kunststoffe und eine noch bessere Benetzbarkeit aufweisen; diesbezüglich kann auf die obigen Ausführungen verwiesen werden.

Darüber hinaus erfolgt bei der Einarbeitung der erfindungsgemäßen kohlenstofffaserhaltigen Partikel zumindest im Wesentlichen keine Veränderung der Fließeigenschaften des entsprechenden Kunststoffs, wohingegen eine starke negative Beeinflussung der Fließeigenschaften im Stand der Technik erhalten wird. Somit erfolgt bei Einarbeitung der erfindungsgemäßen kohlenstofffaserhaltigen Partikel, insbesondere Pellets oder Granulate, zumindest im Wesentlichen keine negative Beeinflussung der Weiterverarbeitung der Verbundstoffe, insbesondere durch Spritzgießen oder dergleichen, wie es jedoch im Stand der Technik der Fall ist.

Schließlich ist auch eine Einarbeitung in hydraulische Bindemittel, wie Zement, Mischbinder, hydraulischer Kalk (Trass), Putz- und Mauerbinder auf Zement-/Acryl-Basis, Gips oder dergleichen, welche sowohl an Luft wie auch unter Wasser härten, möglich. Somit können die erfindungsgemäßen kohlenstofffaserhaltigen Partikel zur Verstärkung einer Vielzahl von Matrizes verwendet werden und weisen folglich eine universelle Anwendbarkeit auf.

Weitere Vorteile, Eigenschaften, Aspekte und Merkmale der vorliegenden Erfindung ergeben sich aus der folgenden Beschreibung von in der Zeichnung dargestellten, bevorzugten Ausführungsbeispielen. Die oben beschriebenen und/oder in den Ansprüchen und/oder in den nachfolgenden Figurenbeschreibung offenbarten Merkmale können bedarfsweise auch miteinander kombiniert werden, auch wenn dies nicht im Einzelnen ausdrücklich beschrieben ist.

Es zeigt:
- Fig. 1: schematisch einen Ablauf des erfindungsgemäßen Herstellungsverfahrens für die kohlenstofffaserhaltigen Partikel gemäß einer bevorzugten Ausführungsform des erfindungsgemäßen Verfahrens;
- Fig. 2A: eine schematische Darstellung von erfindungsgemäßen kohlenstofffaserhaltigen Partikeln in Form von Pellets gemäß einer bevorzugten Ausführungsform der Erfindung;
- Fig. 2B: eine schematische Darstellung von erfindungsgemäßen kohlenstofffaserhaltigen Partikeln in Form von Granulaten gemäß einer bevorzugten Ausführungsform der Erfindung.

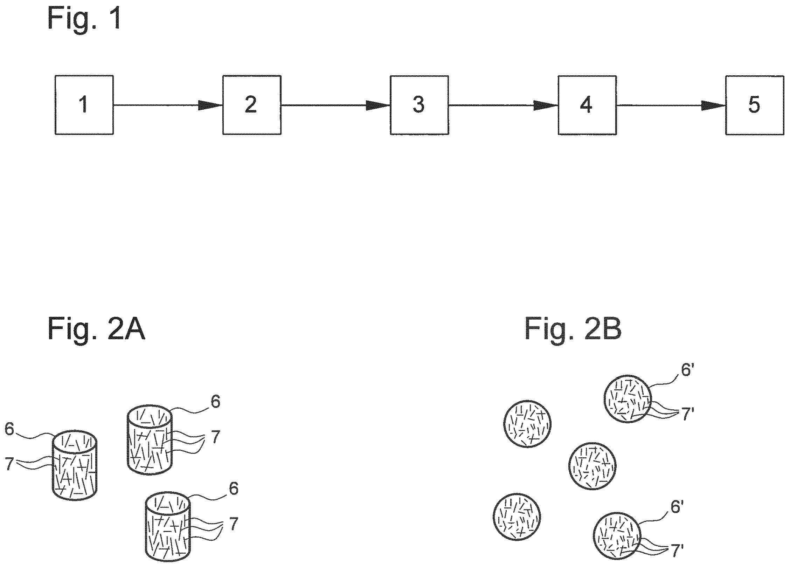

Fig. 1 zeigt schematisch - gemäß einer bevorzugten Ausführungsform der Erfindung - einen Ablauf des erfindungsgemäßen Verfahrens zur Herstellung von kohlenstofffaserhaltigen Partikeln gemäß der vorliegenden Erfindung. Bei Schritt 1 werden zunächst die erfindungsgemäß eingesetzten Kohlenstofffasern bereitgestellt, welche in einem nachfolgenden Schritt 2 einer Zerkleinerung, insbesondere mittels Hacken und/oder Vermahlen, unterzogen werden, bevor sie bei Schritt 3 mit mindestens einem silan- und/oder siloxanbasierten Bindemittel, insbesondere wie zuvor definiert, in Kontakt gebracht werden. Nachfolgend erfolgt in Schritt 4 die Formgebung zu Pellets oder Granulaten, d. h. eine Pelletierung bzw. Granulierung. Schließlich kann sich ein Trocknungsschritt 5 anschließen.

Fig. 2A zeigt schematisch erfindungsgemäße kohlenstofffaserhaltige Partikel in Form zylindrischer Pellets 6, welche aus Kohlenstoffeinzelfasern 7 bestehen, die mittels eines silan- und/oder siloxanbasierten Bindemittels verbunden sind.

Fig. 2B zeigt schematisch eine Ausführungsform, bei welcher die erfindungsgemäßen kohlenstofffaserhaltigen Partikel in Form von kornförmigen Granulaten 6' aus Kohlenstoffeinzelfasern 7' vorliegen.

Im Rahmen der vorliegenden Erfindung werden somit vorzugsweise zerkleinerte Kohlenstoffeinzelfasern zu kohlenstofffaserhaltigen Partikeln, insbesondere in Form von Pellets oder Granulaten, zusammengeführt, was im Rahmen der vorliegenden Erfindung unter Verwendung eines silan- und/oder siloxanbasierten Bindemittels erfolgt; auf diese Weise lassen sich stabile Partikel auf Kohlenstofffaserbasis bereitstellen, welche sich ohne Weiteres als Zuschlagstoffe bzw. Additive in Kunststoffen unterschiedlichster Art einarbeiten lassen, insbesondere mittels Compoundierung. Die erfindungsgemäßen Partikel ermöglichen in vollkommen überraschender Weise eine homogene Inkorporierung in unterschiedlichste Kunststoffe. Insbesondere sind die erfindungsgemäßen kohlenstofffaserhaltigen Partikel mit dem Vorteil verbunden, dass sie die rheologischen Eigenschaften, insbesondere die Fließeigenschaften der Kunststoffe, in welche sie eingearbeitet werden, nicht bzw. zumindest im Wesentlichen nicht beeinträchtigen.

Durch die staubfreie und rieselfähige Ausbildung der erfindungsgemäßen kohlenstofffaserhaltigen Partikel wird eine signifikant verbesserte Handhabung bei Herstellung und Anwendung erreicht. Insbesondere werden bei der Anwendung die Dosierbarkeit als auch die Einarbeitungseffizienz in signifikanter Weise verbessert.

Im Rahmen der vorliegenden Erfindung ist es somit erstmals gelungen, die mit der Inkorporierung von Kohlenstofffasern im Stand der Technik einhergehenden Nachteile in effizienter Weise zu vermeiden bzw. zumindest im Wesentlichen abzuschwächen.

Besonders gute Eigenschaften werden erhalten, wenn erfindungsgemäß rezyklierte Kohlenstofffasern zum Einsatz kommen. Derartig rezyklierte Kohlenstofffasern können beispielsweise aus kohlenstofffaserverstärkten Kunststoffen (CFKs) gewonnen werden, insbesondere mittels Pyrolyse. Derartige rezyklierte Kohlenstofffasern weisen bei der Einarbeitung in Kunststoffe ein besonders vorteilhaftes Verhalten, insbesondere in Bezug auf die homogene Einarbeitung und die rheologischen Eigenschaften der resultierenden Verbundstoffe, auf.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung aber nicht beschränken sollen.

### Ausführungsbeispiele:

Die besonderen Vorteile der Erfindung sind im Folgenden am Beispiel der Herstellung und der Einarbeitung von Kohlenstofffaserpellets und Kohlenstofffasergranulaten in Kunststoffe beschrieben.

### 1. Herstellung kohlenstofffaserhaltiger Pellets und Granulate

Als Ausgangsmaterialien für die Herstellung der kohlenstofffaserhaltigen Pellets und Granulate werden einerseits Kohlenstoffprimärfasern ohne Schlichtmittel (d.h. Kohlenstoffrohfasern bzw. virgin fibres) und andererseits rezyklierte Kohlenstofffasern eingesetzt.

Als Kohlenstoffprimärfasern werden Kohlenstofffasern vom Typ Panex® 35 von Zoltek Companies Inc., St. Louis, Vereinigte Staaten von Amerika, verwendet.

Die rezyklierten Kohlenstofffasern werden aus kohlenstofffaserverstärkten Kunststoffabfällen (CFK-Abfällen), wie sie beispielsweise im Flugzeugbau (z. B. Flugzeugtragflächen) oder bei Windkrafträdern (z. B. Windflügel) anfallen, erhalten, wobei die Rezyklierung entsprechend dem in den zu derselben Patentfamilie gehörenden Druckschriften WO 2009/092064 A1, EP 2 152 487 B2 sowie US 2010/189629 A1 beschriebenen Verfahren durchgeführt wird. Zu diesem Zweck werden CFK-Abfälle einer thermischen bzw. pyrolytischen Behandlung in einem Pyrolyseofen unterzogen, bei welchem die Kunststoffmatrix pyrolytisch entfernt wird, so dass am Ende des Prozesses reine, d. h. kunststofffreie rezyklierte Kohlenstofffasern resultieren.

Die Zerkleinerung der Kohlenstofffasern erfolgt üblicherweise durch Hacken (Chopping) in einer hierfür üblichen, dem Fachmann an sich bekannten Schneidevorrichtung, wobei die Zerkleinerung grundsätzlich im Nass- oder Trockenverfahren erfolgen kann. Durch mehrfache Zerkleinerung, insbesondere mehrfaches Hacken, werden die gewünschten Faserlängen eingestellt, wie sie nachfolgend im Einzelnen spezifiziert sind.

Für die Herstellung der Pellets genügt im Allgemeinen ein zweifaches Hacken der Ausgangsfasern, um die gewünschte Faserlänge einzustellen, während für die Herstellung der Granulate die zuvor zerkleinerten, insbesondere gehackten Kohlenstofffasern zusätzlich einem anschließenden Mahlvorgang (Milling), insbesondere durch Verwendung von Mühlen, wie Hammermühlen, Pralltellermühlen, Siebkorbmühlen oder dergleichen, unterzogen werden, so dass extrem kurze Faserlängen resultieren, wie sie nachfolgend gleichermaßen spezifiziert sind.

Auf Basis des zuvor beschriebenen Zerkleinerungsvorgangs lassen sich die Längen der Kohlenstofffasern auf die gewünschte Spezifikation einstellen bzw. sozusagen maßschneidern. Zerkleinerte rezyklierte Kohlenstofffasern mit geeigneten Maßen sind aber auch kommerziell verfügbar, beispielsweise von der ELG Carbon Fibre Limited, Coseley, Großbritannien.

Die Spezifikation der jeweiligen zerkleinerten Kohlenstofffasern, welche für die Herstellung der kohlenstofffaserhaltigen Partikel in Form von Pellets und Granulaten im Rahmen der vorliegenden Erfindung verwendet werden, ist in der nachstehenden Tabelle 1 angegeben.

**Tabelle 1: Spezifikationen der eingesetzten Kohlenstofffasern**

| Kohlenstofffasern | Art der Zerkleinerung | Faserlänge | Mittlerer Faserdurchmesser |
|---|---|---|---|
| Primärfasern¹ * | Hacken | 10 - 20 mm (nominal) | 7 - 8 µm |
| Primärfasern² * | Hacken und Vermahlen | 80 - 120 µm (mittlere) | 7 - 8 µm |
| Rezyklierte Fasern¹ | Hacken | 5 - 20 mm (nominal) | 7 - 8 µm |
| Rezyklierte Fasern² | Hacken und Vermahlen | 80 - 120 µm (mittlere) | 7 - 8 µm |

| | | | |
|---|---|---|---|
| ¹Kohlenstofffasern für Pelletherstellung; ²Kohlenstofffasern für Granulatherstellung. * Vergleich | | | |

### a) Herstellung kohlenstofffaserhaltiger Pellets

Die zuvor spezifizierten, mittels Hacken zerkleinerten Kohlenstofffasern werden in einer Konditionieranlage jeweils mit etwa 6 Gew.-%, bezogen auf die Menge der eingesetzten Kohlenstofffasern, eines Bindemittels versetzt, insbesondere besprüht, und anschließend in einer Pelletiermaschine in dem Fachmann an sich bekannter Weise zu Pellets mit Abmessungen von etwa 5 mm x 5 mm (Pelletdurchmesser x Pelletlänge) verarbeitet. Nach optionaler Trocknung bei 120 °C für etwa 1 Stunde werden die kohlenstofffaserhaltigen Pellets erhalten. Als Bindemittel werden alternativ einerseits ein silanbasiertes Bindemittel (erfindungsgemäß; Alkoxysilan, insbesondere Aminoalkoxysilan, vorzugsweise auf Basis einer kommerziell verfügbaren Mischung von Aminoalkylmethoxysilan, N,N-bis(3-(trimethylsiloxy)propyl)-1,2-ethandiamin und N,N'-bis(3-(trimethylsiloxy)propyl)-1,2-ethandiamin, z. B. Xiameter® von Dow Corning), ein siloxanbasiertes Bindemittel (erfindungsgemäß; Polysiloxan, insbesondere auf Basis eines kommerziell verfügbaren polyestermodifizierten Polysiloxans oder aminoalkylfunktionalisierten Polydimethylsiloxans, z. B. Tegomer® von Evonik Industries AG) und ein silan- und siloxanbasiertes Bindemittel (erfindungsgemäß; Gemisch aus vorgenanntem Alkoxysilan und vorgenanntem Polysiloxan), zum Teil zusammen bzw. in Mischung mit einem wachsbasiertem Haftvermittler, sowie andererseits jeweils Bindemittel auf Basis von polymeren organischen Harzen (nichterfindungsgemäß; Epoxidharz, Polyurethanharz, Polyacrylatharz) eingesetzt.

Es werden jeweils Pellets der folgenden Spezifikation gemäß der nachfolgenden Tabelle 2 erhalten.

**Tabelle 2: Eigenschaften der kohlenstofffaserhaltigen Pellets**

| | |
|---|---|
| Durchmesser Pellets | 5 mm |
| Mittlere Länge Pellets | 5 mm |
| Mittlerer Faserdurchmesser der Kohlenstofffasern | 7 - 8 µm |
| Fasernennlänge der Kohlenstofffasern | 3 - 8 mm |
| Schüttdichte der Pellets | 400 - 450 g/l |
| Menge Bindemittel in den Pellets | ca. 6 Gew.-% |

### b) Herstellung kohlenstofffaserhaltiger Granulate

Die zuvor spezifizierten, mittels Hacken und Vermahlen zerkleinerten Kohlenstofffasern werden in einer bewegten Granulattrommel jeweils mit etwa 6 Gew.-%, bezogen auf die Menge der eingesetzten Kohlenstofffasern, eines Bindemittels versetzt, insbesondere besprüht, und anschließend in einer Granuliermaschine in dem Fachmann an sich bekannter Weise zu Granulaten mit Durchmessern von etwa 1 bis 8 mm verarbeitet. Nach optionaler Trocknung bei 120 °C für etwa 1 Stunde werden die kohlenstofffaserhaltigen Granulate erhalten. Als Bindemittel werden alternativ einerseits ein silanbasiertes Bindemittel (erfindungsgemäß; Alkoxysilan, insbesondere Aminoalkoxysilan, vorzugsweise auf Basis einer kommerziell verfügbaren Mischung von Aminoalkylmethoxysilan, N,N-bis(3-(trimethylsiloxy)propyl)-1,2-ethanediamin und N,N'-bis(3-(trimethylsiloxy)propyl)-1,2-ethanediamin, z. B. Xiameter® von Dow Corning), ein siloxanbasiertes Bindemittel (erfindungsgemäß; Polysiloxan, insbesondere auf Basis eines kommerziell verfügbaren polyestermodifizierten Polysiloxans oder aminoalkylfunktionalisierten Polydimethylsiloxans, z. B. Tegomer® von Evonik Industries AG) und ein silan- und siloxanbasiertes Bindemittel (erfindungsgemäß; Gemisch aus vorgenanntem Alkoxysilan und vorgenanntem Polysiloxan), zum Teil zusammen bzw. in Mischung mit einem wachsbasiertem Haftvermittler, sowie andererseits jeweils Bindemittel auf Basis von polymeren organischen Harzen (nichterfindungsgemäß; Epoxidharz, Polyurethanharz, Polyacrylatharz) eingesetzt.

Es werden jeweils Granulate der folgenden Spezifikation gemäß der nachfolgenden Tabelle 3 erhalten.

**Tabelle 3: Eigenschaften der kohlenstofffaserhaltigen Granulate**

| | |
|---|---|
| Durchmesser Granulate | 1 - 8 mm |
| Mittlerer Faserdurchmesser der Kohlenstofffasern | 7 - 8 µm |
| Mittlere Faserlänge der Kohlenstofffasern | 80 - 120 µm |
| Schüttdichte der Granulate | 200 - 250 g/l |
| Menge Bindemittel in den Granulaten | ca. 6 Gew.-% |

### c) Überblick über die hergestellten Pellets und Granulate

Die mit den zuvor beschriebenen Verfahren hergestellten Pellets und Granulate sind in der nachfolgenden Tabelle 4 zusammengefasst.

**Tabelle 4: Hergestellte Pellets und Granulate**

| Nummer | Form | Kohlenstofffasern | Bindemittel |
|---|---|---|---|
| a1 | Pellets | Primärfasern | silanbasiertes Bindemittel |
| a2* | Pellets | Rezyklierte Fasern | silanbasiertes Bindemittel |
| a2.1 | Pellets | Primärfasern | Siloxanbasiertes Bindemittel |
| a2.2* | Pellets | Rezyklierte Fasern | Siloxanbasiertes Bindemittel |
| a2.3 | Pellets | Primärfasern | Silan- und siloxanbasiertes Bindemittel |
| a2.4* | Pellets | Rezyklierte Fasern | Silan- und siloxanbasiertes Bindemittel |
| a2.5* | Pellets | Rezyklierte Fasern | Silan- und siloxanbasiertes Bindemittel mit 10 % Haftvermittler (Wachs) |
| a3 | Pellets | Rezyklierte Fasern | Epoxidharz |
| a4 | Pellets | Rezyklierte Fasern | Polyurethanharz |
| a5 | Pellets | Rezyklierte Fasern | Polyacrylatharz |
| b1 | Granulate | Primärfasern | silanbasiertes Bindemittel |
| b2* | Granulate | Rezyklierte Fasern | silanbasiertes Bindemittel |
| b2.1 | Granulate | Primärfasern | Siloxanbasiertes Bindemittel |
| b2.2* | Granulate | Rezyklierte Fasern | Siloxanbasiertes Bindemittel |
| b2.3 | Granulate | Primärfasern | Silan- und siloxanbasiertes Bindemittel |
| b2.4* | Granulate | Rezyklierte Fasern | Silan- und siloxanbasiertes Bindemittel |
| b2.5* | Granulate | Rezyklierte Fasern | Silan- und siloxanbasiertes Bindemittel mit 10 % Haftvermittler (Wachs) |
| b3 | Granulate | Rezyklierte Fasern | Epoxidharz |
| b4 | Granulate | Rezyklierte Fasern | Polyurethanharz |
| b5 | Granulate | Rezyklierte Fasern | Polyacrylatharz |

| | | | |
|---|---|---|---|
| * erfindungsgemäß | | | |

### 2. Einarbeitung der kohlenstofffaserhaltigen Pellets und Granulate in Kunststoffe (Compoundierung)

Die Einarbeitbarkeit sowie der Einfluss der Granulate und Pellets auf Verbundstoffe (Compounds) wird anhand von Polycarbonat (PC) als Kunststoffmatrix untersucht. Die zuvor hergestellten Granulate und Pellets können jedoch auch in andere thermoplastische und duroplastische Kunststoffe, wie Polyetheretherketone (PEEK), Polytetrafluorethylene (PTFE), Polyurethane (PUR), Methacrylatharze (MMA) etc., eingearbeitet werden.

In das Polycarbonat (PC) werden in einem hierfür üblichen, dem Fachmann an sich bekannten Schnecken-Compounder etwa jeweils 10 Gew.-%, bezogen auf die eingesetzte Menge an Polycarbonat (PC), der zuvor spezifizierten kohlenstofffaserhaltigen Pellets oder Granulate homogen eingearbeitet, so dass ein faserhaltiger Verbundstoff (Compound) erhalten wird. Als Vergleich werden ebenfalls die für die Herstellung der Pellets und Granulate verwendeten zerkleinerten Kohlenstofffasern eingearbeitet. Für jeden auf diese Weise erhaltenen Verbundstoff wird jeweils die Schmelze-Volumenfließrate (MVR) nach ISO 1133 bestimmt.

Die erhaltenen Ergebnisse sind in Tabelle 5 zusammengefasst, wobei jeweils die Änderung des MVR-Wertes in Prozent im Vergleich zu dem Ausgangs-MVR-Wert des verwendeten reinen Polycarbonats (PC) ohne Fasern angegeben ist:

**Tabelle 5: Beeinflussung der Schmelz-Volumenfließrate (MVR) für Verbundstoffe**

| Nummer | Form | Kohlenstofffasern | Beeinflussung von MVR [cm³/10min] in % |
|---|---|---|---|
| | | Rezyklierte Fasern (gehackt)** | -41 % |
| | | Rezyklierte Fasern (gehackt und gemahlen)** | - 40 % |
| | | Primärfasern (gehackt)** | - 49 % |
| | | Primärfasern (gehackt und gemahlen)** | - 46 % |
| a1 | Pellets | Primärfasern (gehackt) | - 4 % |
| a2* | Pellets | Rezyklierte Fasern (gehackt) | - 2 % |
| a2.1 | Pellets | Primärfasern (gehackt) | - 8 % |
| a2.2* | Pellets | Rezyklierte Fasern (gehackt) | - 6 % |
| a2.3 | Pellets | Primärfasern (gehackt) | - 4 % |
| a2.4* | Pellets | Rezyklierte Fasern (gehackt) | - 2 % |
| a2.5* | Pellets | Rezyklierte Fasern (gehackt) | - 1 % |
| a3 | Pellets | Rezyklierte Fasern (gehackt) | - 30 % |
| a4 | Pellets | Rezyklierte Fasern (gehackt) | - 27 % |
| a5 | Pellets | Rezyklierte Fasern (qehackt) | - 20 % |
| b1 | Granulate | Primärfasern (gehackt und gemahlen) | - 3 % |
| b2* | Granulate | Rezyklierte Fasern (gehackt und gemahlen) | - 1 % |
| b2.1 | Granulate | Primärfasern (gehackt und gemahlen) | - 9 % |
| b2.2* | Granulate | Rezyklierte Fasern (gehackt und gemahlen) | - 6 % |
| b2.3 | Granulate | Primärfasern (gehackt und gemahlen) | - 5 % |
| b2.4* | Granulate | Rezyklierte Fasern (gehackt und gemahlen) | - 3 % |
| b2.5* | Granulate | Rezyklierte Fasern (gehackt und gemahlen) | - 2 % |
| b3 | Granulate | Rezyklierte Fasern (gehackt und gemahlen) | - 29 % |
| b4 | Granulate | Rezyklierte Fasern (gehackt und gemahlen) | - 25 % |
| b5 | Granulate | Rezyklierte Fasern (gehackt und gemahlen) | - 20 % |

| | | | |
|---|---|---|---|
| * erfindungsgemäß ** ohne Bindemittel | | | |

Es wurde überraschend gefunden, dass die rheologischen Eigenschaften, insbesondere die Fließeigenschaften des Polycarbonats (PC), durch die Einarbeitung der erfindungsgemäßen kohlenstofffaserhaltigen Pellets und Granulate zumindest im Wesentlichen unbeeinflusst bleiben, während die Einarbeitung von gehackten oder gemahlenen Kohlenstofffasern (d. h. nicht in Pellet- oder Granulatform) die Fließrate des Polycarbonats signifikant erniedrigt. Eine signifikante Erniedrigung der Fließrate von Polycarbonat (PC) wurde ebenfalls erhalten, wenn als Bindemittel Epoxidharz, Polyurethanharz und Polyacrylatharz eingesetzt werden (nicht erfindungsgemäß). Eine signifikante Erniedrigung der Fließrate des Verbundstoffes (Compound) erschwert jedoch dessen Weiterverarbeitung, insbesondere in Spritzgießverfahren oder dergleichen.

Weiterhin zeigen die Pellets und Granulate aus rezyklierten Kohlenstofffasern einen weniger starken Einfluss auf die Fließrate des Polycarbonats (PC) im Vergleich zu Pellets und Granulaten aus Primärfasern. Ohne sich auf eine bestimmte Theorie zu beschränken, ist die bessere Benetzbarkeit auf die hydrophilen bzw. wasseraufnehmenden Oberflächeneigenschaften sowie die rauhere Oberflächenstruktur der durch die Rezyklierung erhaltenen Kohlenstofffasern zurückzuführen.

Die Verwendung eines zusätzlichen Haftvermittlers auf Wachsbasis im Bindemittel hat nicht nur keinen negativen Einfluss in Bezug auf das Verarbeitungsverhalten der erfindungsgemäßen Pellets oder Granulat, sondern verbessert darüber hinaus auch noch die Durchsatzgeschwindigkeit bei der Herstellung der erfindungsgemäßen Pellets und Granulate (jeweils ca. 35 % Zeitersparnis bei der Herstellung).

Somit gewährleistet die Verwendung eines silan- und/oder siloxanbasierten Bindemittels im Rahmen der vorliegenden Erfindung eine ausreichende Vernetzung der Kohlenstofffasern zu Pellets oder Granulaten, welche nicht nur eine gute Handhabbarkeit und Dosierbarkeit aufweisen, sondern auch eine homogene Einarbeitung in die Kunststoffmatrix erlauben. Zudem wird eine signifikante Erniedrigung der Fließrate der Kunststoffmatrix, welche die Weiterverarbeitung erschwert, bei Einarbeitung der erfindungsgemäßen kohlenstofffaserhaltigen Granulate und Pellets vermieden.

## Patentansprüche

1. Kohlenstofffaserhaltige Partikel, vorzugweise in Form von Granulaten oder Pellets, insbesondere für die Herstellung von kohlenstofffaserhaltigen Materialien, vorzugsweise kohlenstofffaserhaltigen Kunststoffen,
wobei die kohlenstofffaserhaltigen Partikel
- Kohlenstofffasern, insbesondere in zerkleinerter Form, und
- mindestens ein silan- und/oder siloxanbasiertes Bindemittel
enthalten,
wobei die Kohlenstofffasern als rezyklierte Kohlenstofffasern vorliegen, wobei die rezyklierten Kohlenstofffasern aus kohlenstofffaserverstärkten Kunststoffen (CFK) pyrolytisch oder mittels pyrolytischer Zersetzung der Kunststoffmatrix gewonnen sind.

2. Kohlenstofffaserhaltige Partikel nach Anspruch 1, wobei die kohlenstofffaserhaltigen Partikel in Form eines rieselfähigen Materials vorliegen oder in rieselfähiger Form vorliegen.

3. Kohlenstofffaserhaltige Partikel nach einem der vorangehenden Ansprüche, wobei die kohlenstofffaserhaltigen Partikel eine Schüttdichte im Bereich von 150 bis 750 g/l, insbesondere 175 bis 700 g/l, vorzugsweise 180 bis 600 g/l, aufweisen.

4. Kohlenstofffaserhaltige Partikel nach einem der vorangehenden Ansprüche, wobei die Kohlenstofffasern eine mittlere Faserlänge im Bereich von 0,1 bis 5.000 µm, insbesondere 1 bis 4.500 µm, vorzugsweise 10 bis 4.000 µm, bevorzugt 50 bis 3.500 µm, besonders bevorzugt 75 bis 3.250 µm, aufweisen.

5. Kohlenstofffaserhaltige Partikel nach einem der vorangehenden Ansprüche, wobei die Kohlenstofffasern einen mittleren Faserdurchmesser im Bereich von 0,1 bis 100 µm, insbesondere 1 bis 50 µm, vorzugsweise 2 bis 25 µm, bevorzugt 3 bis 15 µm, besonders bevorzugt 4 bis 10 µm, aufweisen.

6. Kohlenstofffaserhaltige Partikel nach einem der vorangehenden Ansprüche,
wobei die kohlenstofffaserhaltigen Partikel das silan- und/oder siloxanbasierte Bindemittel in einer Menge von 0,1 bis 40 Gew.-%, insbesondere 0,5 bis 30 Gew.-%, vorzugsweise 1 bis 20 Gew.-%, besonders bevorzugt 2 bis 15 Gew.-%, ganz besonders bevorzugt 3 bis 10 Gew.-%, bezogen auf die kohlenstofffaserhaltigen Partikel, aufweisen; und
wobei die kohlenstofffaserhaltigen Partikel Kohlenstofffasern in einer Menge von 60 bis 99,9 Gew.-%, insbesondere 70 bis 99,5 Gew.-%, vorzugsweise 80 bis 99 Gew.-%, besonders bevorzugt 85 bis 98 Gew.-%, ganz besonders bevorzugt 90 bis 97 Gew.-%, bezogen auf die kohlenstofffaserhaltigen Partikel, aufweisen.

7. Kohlenstofffaserhaltige Partikel nach einem der vorangehenden Ansprüche, wobei die kohlenstofffaserhaltigen Partikel eine Vielzahl von Kohlenstofffasern, insbesondere 10 bis 1.000.000 Kohlenstofffasern, vorzugsweise 25 bis 500.000 Kohlenstofffasern, bevorzugt 50 bis 100.000 Kohlenstofffasern, besonders bevorzugt 75 bis 50.000 Kohlenstofffasern, ganz besonders bevorzugt 100 bis 10.000 Kohlenstofffasern, pro Partikel aufweisen.

8. Kohlenstofffaserhaltige Partikel nach einem der vorangehenden Ansprüche,
wobei das silan- und/oder siloxanbasierten Bindemittel mindestens ein Silan und/oder mindestens ein Siloxan enthält oder hieraus besteht; oder
wobei das silan- und/oder siloxanbasierte Bindemittel mindestens ein Organosilan, ausgewählt aus monomeren, oligomeren oder polymeren Organosilanen, und/oder mindestens ein Organosiloxan, ausgewählt aus monomeren, oligomeren oder polymeren Organosiloxanen, enthält, gegebenenenfalls zusammen mit mindestens einem Löse- oder Dispergiermittel oder mindestens einem Additiv, oder hieraus besteht.

9. Kohlenstofffaserhaltige Partikel nach einem der vorangehenden Ansprüche,
wobei das silan- und/oder siloxanbasierte Bindemittel mindestens ein (Organo-)-Siloxan, vorzugsweise mindestens ein Poly(organo)siloxan, enthält oder hieraus besteht, insbesondere wobei das silan- und/oder siloxanbasierte Bindemittel oder das mindestens eine (Organo-)Siloxan, vorzugsweise das mindestens eine Poly(organo)siloxan, mindestens eine polare oder hydrophile Gruppe aufweist, insbesondere wobei die polare oder hydrophile Gruppe ausgewählt ist aus Aminogruppen, Alkoxygruppen, Aryloxygruppen, Aralkyloxygruppen, Hydroxylgruppen, Thiolgruppen, Halogenen, Carboxylsäuregruppen, Carbonsäureestergruppen und Ammoniumgruppen, insbesondere Aminogruppen und Hydroxylgruppen, vorzugsweise primären Aminogruppen, sekundären Aminogruppen, tertiären Aminogruppen und Hydroxylgruppen.

10. Kohlenstofffaserhaltige Partikel nach einem der vorangehenden Ansprüche,
wobei das silan- und/oder siloxanbasierte Bindemittel außerdem mindestens einen Haftvermittler, insbesondere ausgewählt aus der Gruppe von Harzen und Wachsen, enthält, insbesondere in Mengen, bezogen auf das silan- und/oder siloxanbasierte Bindemittel, im Bereich von 0,01 bis 80 Gew.-%, insbesondere 0,1 bis 50 Gew.-%, vorzugsweise 1 bis 30 Gew.-%.

11. Kohlenstofffaserhaltige Partikel nach einem der Ansprüche 1 bis 10, wobei die kohlenstofffaserhaltigen Partikel in Form von Granulaten vorliegen.

12. Kohlenstofffaserhaltige Partikel nach Anspruch 11,
wobei die Granulate einen Durchmesser im Bereich von 0,1 bis 40 mm, insbesondere 0,2 bis 30 mm, vorzugsweise 0,4 bis 20 mm, bevorzugt 0,5 bis 10 mm, ganz besonders bevorzugt 0,75 bis 6 mm, aufweisen; und
wobei die Granulate eine Schüttdichte im Bereich von 1 bis 800 g/l, insbesondere 10 bis 700 g/l, vorzugsweise 40 bis 600 g/l, bevorzugt 70 bis 500 g/l, besonders bevorzugt 100 bis 400 g/l, ganz besonders bevorzugt 175 bis 300 g/l, aufweisen.

13. Kohlenstofffaserhaltige Partikel nach einem der Ansprüche 1 bis 10, wobei die kohlenstofffaserhaltigen Partikel in Form von Pellets, vorzugsweise mit zumindest im Wesentlichen zylindrischer Form, vorliegen.

14. Kohlenstofffaserhaltige Partikel nach Anspruch 13,
wobei die Pellets einen Durchmesser im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen; und
wobei die Pellets eine Länge im Bereich von 0,5 bis 50 mm, insbesondere 1 bis 40 mm, vorzugsweise 2 bis 25 mm, bevorzugt 3 bis 10 mm, besonders bevorzugt 4 bis 8 mm, aufweisen, und
wobei die Pellets eine Schüttdichte im Bereich von 1 bis 1.000 g/l, insbesondere 10 bis 800 g/l, vorzugsweise 100 bis 700 g/l, bevorzugt 200 bis 600 g/l, besonders bevorzugt 300 bis 500 g/l, ganz besonders bevorzugt 350 bis 475 g/l, aufweisen.

15. Verfahren zur Herstellung von kohlenstofffaserhaltigen Partikeln gemäß einem der Ansprüche 1 bis 14, wobei Kohlenstofffasern, insbesondere in zerkleinerter Form, zunächst mit mindestens einem silan- und/oder siloxanbasierten Bindemittel in Kontakt gebracht werden und nachfolgend die mit dem silan- und/oder siloxanbasierten Bindemittel in Kontakt gebrachten Kohlenstofffasern zu diskreten Partikeln geformt werden, wobei die Kohlenstofffasern als rezyklierte Kohlenstofffasern vorliegen, wobei die rezyklierten Kohlenstofffasern aus kohlenstofffaserverstärkten Kunststoffen (CFK) pyrolytisch oder mittels pyrolytischer Zersetzung der Kunststoffmatrix gewonnen sind.

16. Verwendung von kohlenstofffaserhaltigen Partikeln gemäß einem der Ansprüche 1 bis 14 als Additiv, insbesondere für Kunststoffe, Baustoffe oder zementäre Systeme oder aber zur Herstellung von kohlenstofffaserhaltigen Kunststoffen oder aber zur Compoundierung, insbesondere zur Inkorporierung in Kunststoffen.

## Claims

1. Carbon-fibre-containing particles, preferably in the form of granules or pellets, in particular for the production of carbon-fibre-containing materials, preferably carbon-fibre-containing plastics,
wherein the carbon-fibre-containing particles contain
- carbon fibres, in particular in comminuted form, and
- at least one silane- and/or siloxane-based binder,
wherein the carbon fibres are present as recycled carbon fibres, wherein the recycled carbon fibres are obtained from carbon-fibre-reinforced plastics (CFRP) pyrolytically or by means of pyrolytic decomposition of the plastic matrix.

2. The carbon-fibre-containing particles according to claim 1, wherein the carbon-fibre-containing particles are present in the form of a pourable material or are present in pourable form.

3. The carbon-fibre-containing particles according to one of the preceding claims, wherein the carbon-fibre-containing particles have a bulk density in the range of 150 to 750 g/l, in particular 175 to 700 g/l, preferably 180 to 600 g/l.

4. The carbon-fibre-containing particles according to one of the preceding claims, wherein the carbon fibres have an average fibre length in the range of from 0.1 to 5000 µm, in particular 1 to 4500 µm, preferably 10 to 4000 µm, preferably 50 to 3500 µm, particularly preferably 75 to 3250 µm.

5. The carbon-fibre-containing particles according to one of the preceding claims, wherein the carbon fibres have an average fibre diameter in the range of from 0.1 to 100 µm, in particular 1 to 50 µm, preferably 2 to 25 µm, preferably 3 to 15 µm, particularly preferably 4 to 10 µm.

6. The carbon-fibre-containing particles according to one of the preceding claims,
wherein the carbon-fibre-containing particles have the silane- and/or siloxane-based binder in an amount of from 0.1 to 40 wt.%, in particular 0.5 to 30 wt.%, preferably 1 to 20 wt.%, particularly preferably 2 to 15 wt.%, very particularly preferably 3 to 10 wt.%, relative to the carbon-fibre-containing particles; and
wherein the carbon-fibre-containing particles contain carbon fibres in an amount of from 60 to 99.9 wt.%, in particular 70 to 99.5 wt.%, preferably 80 to 99 wt.%, particularly preferably 85 to 98 wt.%, very particularly preferably 90 to 97 wt.%, relative to the carbon-fibre-containing particles.

7. The carbon-fibre-containing particles according to one of the preceding claims, wherein the carbon-fibre-containing particles have a plurality of carbon fibres, in particular 10 to 1,000,000 carbon fibres, preferably 25 to 500,000 carbon fibres, preferably 50 to 100,000 carbon fibres, particularly preferably 75 to 50,000 carbon fibres, very particularly preferably 100 to 10,000 carbon fibres per particle.

8. The carbon-fibre-containing particles according to one of the preceding claims,
wherein the silane- and/or siloxane-based binder contains or consists of at least one silane and/or at least one siloxane; or
wherein the silane- and/or siloxane-based binder contains at least one organosilane, chosen from monomeric, oligomeric or polymeric organosilanes, and/or at least one organosiloxane, chosen from monomeric, oligomeric or polymeric organosiloxanes, optionally together with at least one solvent or dispersant or at least one additive, or consists thereof.

9. The carbon-fibre-containing particles according to one of the preceding claims,
wherein the silane- and/or siloxane-based binder contains or consists of at least one (organo)siloxane, preferably at least one poly(organo)siloxane, in particular wherein the silane- and/or siloxane-based binder or the at least one (organo)siloxane, preferably the at least one poly(organo)siloxane, has at least one polar or hydrophilic group, in particular wherein the polar or hydrophilic group is chosen from amino groups, alkoxy groups, aryloxy groups, aralkyloxy groups, hydroxyl groups, thiol groups, halogens, carboxylic acid groups, carboxylic acid ester groups and ammonium groups, in particular amino groups and hydroxyl groups, preferably primary amino groups, secondary amino groups, tertiary amino groups and hydroxyl groups.

10. The carbon-fibre-containing particles according to one of the preceding claims,
wherein the silane- and/or siloxane-based binder also comprises at least one bonding agent, in particular chosen from the group of resins and waxes, in particular in amounts, relative to the silane- and/or siloxane-based binder, in the range of from 0.01 to 80 wt.%, in particular 0.1 to 50 wt.%, preferably 1 to 30 wt.%.

11. The carbon-fibre-containing particles according to one of claims 1 to 10, wherein the carbon-fibre-containing particles are present in the form of granules.

12. The carbon-fibre-containing particles according to claim 11,
wherein the granules have a diameter in the range of from 0.1 to 40 mm, in particular 0.2 to 30 mm, preferably 0.4 to 20 mm, preferably 0.5 to 10 mm, very particularly preferably 0.75 to 6 mm; and
wherein the granules have a bulk density in the range of from 1 to 800 g/l, in particular 10 to 700 g/l, preferably 40 to 600 g/l, preferably 70 to 500 g/l, particularly preferably 100 to 400 g/l, very particularly preferably 175 to 300 g/l.

13. The carbon-fibre-containing particles according to one of claims 1 to 10, wherein the carbon-fibre-containing particles are present in the form of pellets, preferably having an at least substantially cylindrical shape.

14. The carbon-fibre-containing particles according to claim 13,
wherein the pellets have a diameter in the range of from 0.5 to 50 mm, in particular 1 to 40 mm, preferably 2 to 25 mm, preferably 3 to 10 mm, very particularly preferably 4 to 8 mm; and
wherein the pellets have a length in the range of from 0.5 to 50 mm, in particular 1 to 40 mm, preferably 2 to 25 mm, preferably 3 to 10 mm, particularly preferably 4 to 8 mm, and wherein the pellets have a bulk density in the range of from 1 to 1000 g/l, in particular 10 to 800 g/l, preferably 100 to 700 g/l, preferably 200 to 600 g/l, particularly preferably 300 to 500 g/l, very particularly preferably 350 to 475 g/l.

15. A method for producing carbon-fibre-containing particles according to one of claims 1 to 14, wherein carbon fibres, in particular in comminuted form, are first brought into contact with at least one silane- and/or siloxane-based binder and subsequently the carbon fibres brought into contact with the silane- and/or siloxane-based binder are formed into discrete particles, wherein the carbon fibres are present as recycled carbon fibres, wherein the recycled carbon fibres are obtained from carbon-fibre-reinforced plastics (CFRP) pyrolytically or by means of pyrolytic decomposition of the plastic matrix.

16. Use of carbon-fibre-containing particles according to one of claims 1 to 14 as an additive, in particular for plastics, building materials or cementitious systems or else for the production of carbon-fibre-containing plastics or else for compounding, in particular for incorporation into plastics.

## Revendications

1. Particules contenant des fibres de carbone, de préférence sous forme de granulés ou de pastilles, en particulier pour la fabrication de matériaux contenant des fibres de carbone, de préférence des plastiques contenant des fibres de carbone,
les particules contenant des fibres de carbone
- contenant des fibres de carbone, en particulier sous forme broyée, et
- au moins un liant à base de silane et/ou de siloxane,
les fibres de carbone se présentant sous forme de fibres de carbone recyclées, les fibres de carbone recyclées étant obtenues par voie pyrolytique ou par une décomposition pyrolytique de la matrice plastique, à partir de plastiques renforcés par des fibres de carbone (CFK).

2. Particules contenant des fibres de carbone selon la revendication 1, les particules contenant des fibres de carbone se présentant sous forme d'un matériau à écoulement libre ou se présentant sous une forme à écoulement libre.

3. Particules contenant des fibres de carbone selon l'une des revendications précédentes, les particules contenant des fibres de carbone présentant une masse volumique apparente comprise dans la plage de 150 à 750 g/l, en particulier de 175 à 700 g/l, de préférence de 180 à 600 g/l.

4. Particules contenant des fibres de carbone selon l'une des revendications précédentes, les fibres de carbone présentant une longueur moyenne de fibres comprise dans la plage de 0,1 à 5000 µm, en particulier de 1 à 4500 µm, de préférence de 10 à 4000 µm, préférentiellement de 50 à 3500 µm, d'une manière particulièrement préférée de 75 à 3250 µm.

5. Particules contenant des fibres de carbone selon l'une des revendications précédentes, les fibres de carbone présentant un diamètre moyen de fibres compris dans la plage de 0,1 à 100 µm, en particulier de 1 à 50 µm, de préférence de 2 à 25 µm, préférentiellement de 3 à 15 µm, d'une manière particulièrement préférée de 4 à 10 µm.

6. Particules contenant des fibres de carbone selon l'une des revendications précédentes, les particules contenant des fibres de carbone comprenant le liant à base de silane et/ou de siloxane en une quantité de 0,1 à 40 % en poids, en particulier de 0,5 à 30 % en poids, de préférence de 1 à 20 % en poids, d'une manière particulièrement préférée de 2 à 15 % en poids, d'une manière tout particulièrement préférée de 3 à 10 % en poids, par rapport aux particules contenant des fibres de carbone ; et
les particules contenant des fibres de carbone comprenant des fibres de carbone en une quantité de 60 à 99,9 % en poids, en particulier de 70 à 99,5 % en poids, de préférence de 80 à 99 % en poids, d'une manière particulièrement préférée de 85 à 98 % en poids, d'une manière tout particulièrement préférée de 90 à 97 % en poids, par rapport aux particules contenant des fibres de carbone.

7. Particules contenant des fibres de carbone selon l'une des revendications précédentes, les particules contenant des fibres de carbone comprenant par particule un grand nombre de fibres de carbone, en particulier de 10 à 1 000 000 fibres de carbone, de préférence 25 à 500 000 fibres de carbone, préférentiellement 50 à 100 000 fibres de carbone, d'une manière particulièrement préférée 75 à 50 000 fibres de carbone, d'une manière tout particulièrement préférée 100 à 10 000 fibres de carbone.

8. Particules contenant des fibres de carbone selon l'une des revendications précédentes, le liant à base de silane et/ou de siloxane contenant au moins un silane et/ou au moins un siloxane, ou en étant constitué ; ou
le liant à base de silane et/ou de siloxane contenant au moins un organosilane choisi parmi les organosilanes monomères, oligomères ou polymères, et/ou au moins un organosiloxane choisi parmi les organosiloxanes monomères, oligomères ou polymères, éventuellement en même temps qu'au moins un solvant ou un dispersant, ou au moins un additif, ou en étant constitué.

9. Particules contenant des fibres de carbone selon l'une des revendications précédentes, le liant à base de silane et/ou de siloxane contenant au moins un (organo)siloxane, de préférence au moins un poly(organo)siloxane ou en étant constitué, en particulier le liant à base de silane et/ou de siloxane ou l'au moins un (organo)siloxane, de préférence l'au moins un poly(organo)siloxane, comprenant au moins un groupe polaire ou hydrophile, en particulier le groupe polaire ou hydrophile étant choisi parmi les groupes amino, les groupes alcoxy, les groupes aryloxy, les groupes aralkyloxy, les groupes hydroxyle, les groupes thiol, les halogènes, les groupes acide carboxylique, les groupes ester d'acide carboxylique et les groupes ammonium, en particulier les groupes amino et les groupes hydroxyle, de préférence les groupes amino primaires, les groupes amino secondaires, les groupes amino tertiaires et les groupes hydroxyle.

10. Particules contenant des fibres de carbone selon l'une des revendications précédentes, le liant à base de silane et/ou de siloxane contenant en outre au moins un promoteur d'adhérence, en particulier choisi dans le groupe des résines et des cires, en particulier en des quantités, rapportées au liant à base de silane et/ou de siloxane, comprises dans la plage de 0,01 à 80 % en poids, en particulier de 0,1 à 50 % en poids, de préférence de 1 à 30 % en poids.

11. Particules contenant des fibres de carbone selon l'une des revendications 1 à 10, les particules contenant des fibres de carbone se présentant sous forme de granulés.

12. Particules contenant des fibres de carbone selon la revendication 11,
les granulés présentant un diamètre compris dans la plage de 0,1 à 40 mm, en particulier de 0,2 à 30 mm, de préférence de 0,4 à 20 mm, préférentiellement de 0,5 à 10 mm, d'une manière tout particulièrement préférée de 0,75 à 6 mm ; et
les granulés présentant une masse volumique apparente comprise dans la plage de 1 à 800 g/l, en particulier de 10 à 700 g/l, de préférence de 40 à 600 g/l, préférentiellement de 70 à 500 g/l, d'une manière particulièrement préférée de 100 à 400 g/l, d'une manière tout particulièrement préférée de 175 à 300 g/l.

13. Particules contenant des fibres de carbone selon l'une des revendications 1 à 10, les particules contenant des fibres de carbone se présentant sous forme de pastilles, de préférence sous une forme au moins l'essentiel cylindrique.

14. Particules contenant des fibres de carbone selon la revendication 13,
les pastilles présentant un diamètre compris dans la plage de 0,5 à 50 mm, en particulier de 1 à 40 mm, de préférence de 2 à 25 mm, préférentiellement de 3 à 10 mm, d'une manière particulièrement préférée de 4 à 8 mm ; et
les pastilles présentant une longueur comprise dans la plage de 0,5 à 50 mm, en particulier de 1 à 40 mm, de préférence de 2 à 25 mm, préférentiellement de 3 à 10 mm, d'une manière particulièrement préférée de 4 à 8 mm, et
les pastilles présentant une masse volumique apparente comprise dans la plage de 1 à 1000 g/l, en particulier de 10 à 800 g/l, de préférence de 100 à 700 g/l, préférentiellement de 200 à 600 g/l, d'une manière particulièrement préférée de 300 à 500 g/l, d'une manière tout particulièrement préférée de 350 à 475 g/l.

15. Procédé de fabrication de particules contenant des fibres de carbone selon l'une des revendications 1 à 14, dans lequel des fibres de carbones, en particulier sous forme broyée, sont d'abord mises en contact avec au moins un liant à base de silane et/ou de siloxane, puis les fibres de carbone mises en contact avec le liant à base de silane et/ou de siloxane sont façonnées en particules discrètes, les fibres de carbone se présentant sous forme de fibres de carbone recyclées, les fibres de carbone recyclées étant obtenues par voie pyrolytique ou par une décomposition pyrolytique de la matrice plastique à partir de plastiques renforcés par des fibres de carbone (CFK).

16. Utilisation de particules contenant des fibres de carbones selon l'une des revendications 1 à 14 en tant qu'additif, en particulier pour plastiques, matériaux de construction ou systèmes de type ciment, ou en variante pour la fabrication de plastiques contenant des fibres de carbone, ou en variante pour compoundage, en particulier pour incorporation dans des plastiques.
